# EUROPÄISCHE PATENTSCHRIFT

(11) **EP 3 585 572 B1**
(45) Veröffentlichungstag und Bekanntmachung des Hinweises auf die Patenterteilung: **05.05.2021**
(21) Anmeldenummer: 18706493.6
(22) Anmeldetag: 20.02.2018
(51) Int. Cl.: B25J 15/02, F16H 25/20

(54) **ROBOTERGREIFER MIT EINER ANTRIEBSVORRICHTUNG**
ROBOT GRIPPER HAVING A DRIVE DEVICE
PRÉHENSEUR DE ROBOT POURVU D'UN DISPOSITIF D'ENTRAÎNEMENT

(30) Priorität: 27.02.2017 DE 102017203125
(43) Veröffentlichungstag der Anmeldung: 01.01.2020
(73) Patentinhaber: KUKA Deutschland GmbH, 86165 Augsburg (DE)
(72) Erfinder: BRUDNIOK, Sven, 86853 Langerringen (DE)
(74) Vertreter: Tillmann, Axel
(86) Internationale Anmeldenummer: PCT/EP2018/054092
(87) Internationale Veröffentlichungsnummer: WO 2018/153833

(56) Entgegenhaltungen:
- JP-U- S62 141 491
- US-A- 5 263 381
- US-A1- 2013 319 147
- US-A1- 2014 028 118

## Beschreibung

Die Erfindung betrifft einen Robotergreifer, aufweisend einen Greifergrundkörper, der der einen Anschlussflansch aufweist, der zur Befestigung des Robotergreifers an einem Werkzeugflansch eines Roboterarms ausgebildet ist, des Weiteren aufweisend einen ersten Greiferfinger und wenigstens einen zweiten Greiferfinger, wobei der erste Greiferfinger mittels einer Antriebsvorrichtung zum Öffnen und Schließen des Robotergreifers relativ zum zweiten Greiferfinger automatisch verstellbar ist, und die Antriebsvorrichtung dazu einen Motor und ein Getriebe umfasst, wobei das Getriebe einen Spindeltrieb aufweist, der eine im Greifergrundkörper durch den Motor drehangetriebene Antriebsspindel und eine auf der Antriebsspindel laufende Abtriebs-Spindelmutter aufweist, die an einen Fingerträger gekoppelt ist, der mit dem ersten Greiferfinger verbunden ist, um den ersten Greiferfinger dadurch zu bewegen, dass eine von dem Motor angetriebene Drehung der Antriebsspindel, die Abtriebs-Spindelmutter linear verstellt und die Abtriebs-Spindelmutter ihrerseits den mit dem ersten Greiferfinger verbundenen Fingerträger bewegt, um den ersten Greiferfinger relativ zum zweiten Greiferfinger zu verstellen.

Aus der EP 2 660 015 B1 ist ein Greifer zum Manipulieren von, insbesondere röhrchenförmigen, Probengefäßen bekannt, mit einer Greiferbasis, wenigstens zwei je einen Halteabschnitt zum Erfassen eines Probengefäßes aufweisenden, jeweils um eine Fingerrotationsachse relativ zu der Greiferbasis verdrehbar an der Greiferbasis angeordneten Greiferfingern, wobei die Halteabschnitte der Greiferfinger jeweils in Bezug auf die zugeordnete Fingerrotationsachse azentrisch angeordnet sind, und mit einem ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden, wobei die Greiferbasis an einem Grundkörper und relativ zu diesem um eine von den Fingerrotationsachsen verschiedene Basisrotationsachse drehbar angeordnet ist, dass ein zweiter Antrieb zum Verdrehen der Greiferbasis relativ zu dem Grundkörper vorgesehen ist und dass eine Steuereinrichtung vorgesehen ist zum Steuern der Antriebe derart, dass durch eine Bewegungskombination aus Verdrehen der Greiferfinger relativ zu der Greiferbasis und Verdrehen der Greiferbasis relativ zu dem Grundkörper für jeden der Halteabschnitte der Greiferfinger jeweils eine im Wesentlichen lineare Bewegung relativ zu dem Grundkörper resultiert.

JP S62 141491 U offenbart einen Robotergreifer wobei die Greifenfinger durch einen Spindeltrieb und eine Spindelmutter bewegt werden.

Aufgabe der Erfindung ist es, einen Robotergreifer zu schaffen, der ein besonders zuverlässiges Getriebe aufweist, das ausgebildet ist, wenigstens einen Greiferfinger des Robotergreifers zu bewegen.

Diese Aufgabe wird erfindungsgemäß gelöst durch einen Robotergreifer, aufweisend einen Greifergrundkörper, der einen Anschlussflansch aufweist, der zur Befestigung des Robotergreifers an einem Werkzeugflansch eines Roboterarms ausgebildet ist, des Weiteren aufweisend einen ersten Greiferfinger und wenigstens einen zweiten Greiferfinger, wobei der erste Greiferfinger mittels einer Antriebsvorrichtung zum Öffnen und Schließen des Robotergreifers relativ zum zweiten Greiferfinger automatisch verstellbar ist, und die Antriebsvorrichtung dazu einen Motor und ein Getriebe umfasst, wobei das Getriebe einen Spindeltrieb aufweist, der eine im Greifergrundkörper durch den Motor drehangetriebene Antriebsspindel und eine auf der Antriebsspindel laufende Abtriebs-Spindelmutter aufweist, die an einen Fingerträger gekoppelt ist, der mit dem ersten Greiferfinger verbunden ist, um den ersten Greiferfinger dadurch zu bewegen, dass eine von dem Motor angetriebene Drehung der Antriebsspindel, die Abtriebs-Spindelmutter linear verstellt und die Abtriebs-Spindelmutter ihrerseits den mit dem ersten Greiferfinger verbundenen Fingerträger bewegt, um den ersten Greiferfinger relativ zum zweiten Greiferfinger zu verstellen, wobei die Abtriebs-Spindelmutter einen ersten Mutternkörper aufweist, der ein zur Antriebsspindel korrespondierendes erstes Gewinde aufweist, einen zweiten Mutternkörper aufweist, der ein zur Antriebsspindel korrespondierendes zweites Gewinde aufweist, und der erste Mutternkörper mit dem zweiten Mutternkörper mittels einer Parallellenkeranordnung verbunden ist, die ausgebildet ist, den ersten Mutternkörper in einem vorbestimmten Abstand von dem zweiten Mutternkörper zu halten und dabei einen Parallelversatz des ersten Mutternkörpers von dem zweiten Mutternkörper zuzulassen, wobei der erste Mutternkörper und der zweite Mutternkörper mittels eines Schiebelagers in einem Rahmen gelagert sind, wobei das Schiebelagers ausgebildet ist, den ersten Mutternkörper und den zweiten Mutternkörper so zu lagern, dass sie unabhängig voneinander senkrecht zur Antriebsspindel in einer Ebene verschoben werden können und Antriebskräfte, axial zur Antriebsspindel an den Fingerträger weitergeleitet werden.

Wenn ein erster Greiferfinger und wenigstens ein zweiter Greiferfinger vorhanden ist, und dabei der erste Greiferfinger mittels einer Antriebsvorrichtung zum Öffnen und Schließen des Robotergreifers relativ zum zweiten Greiferfinger automatisch verstellbar ist, dann kann dies in einer ersten Ausführungsform bedeuten, dass der erste Greiferfinger bezüglich des Greifergrundkörpers verstellbar gelagert ist und ein einziger zweiter Greiferfinger oder mehrere zweite Greiferfinger starr bezüglich des Greifergrundkörpers befestigt sind.

Alternativ kann dies aber auch bedeuten, dass sowohl der erste Greiferfinger mittels einer ersten Antriebsvorrichtung zum Öffnen und Schließen des Robotergreifers relativ zum zweiten Greiferfinger automatisch verstellbar ist und gleichzeitig auch der zweite Greiferfinger mittels einer zweiten AntriebsVorrichtung zum Öffnen und Schließen des Robotergreifers relativ zum ersten Greiferfinger automatisch verstellbar ist. In den Fällen, in denen sowohl der erste Greiferfinger mittels einer ersten Antriebsvorrichtung zum Öffnen und Schließen des Robotergreifers relativ zum zweiten Greiferfinger automatisch verstellbar ist, als auch der zweite Greiferfinger mittels einer zweiten Antriebsvorrichtung zum Öffnen und Schließen des Robotergreifers relativ zum ersten Greiferfinger automatisch verstellbar ist, kann jeder einzelne Greiferfinger an einer separaten Antriebsspindel und einer separaten Abtriebs-Spindelmutter gelagert sein, d.h. es sind zwei oder eine der Anzahl der Greiferfinger entsprechende Anzahl an Antriebsvorrichtungen vorhanden. Alternativ können beide Greiferfinger auf derselben Antriebsspindel gelagert sein. Dabei weist jeder Greiferfinger eine erfindungsgemäß zweiteilige Abtriebs-Spindelmutter auf.

Der vorbestimmte Abstand von erstem Mutternkörper und zweitem Mutternkörper wird durch die Größe, d.h. die konstruktiv feste Länge von Parallellenkern der Parallellenkeranordnung bestimmt.

Die Parallellenkeranordnung kann Koppelstege, insbesondere einen ersten Koppelsteg und einen zweiten Koppelsteg, umfassen, welche den ersten Mutternkörper mit dem zweiten Mutternkörper in einer Parallelogrammanordnung verbinden. Die Koppelstege weisen feste Längen auf. Die Länger aller Koppelstege sind insbesondere gleich.

Der erste Mutternkörper kann mit dem zweiten Mutternkörper über wenigstens zwei voneinander beabstandete starre Koppelstege verbunden sein, derart, dass ein erstes Ende eines ersten Koppelstegs drehgelenkig mit einer ersten Seite des ersten Mutternkörpers verbunden ist, ein zweites Ende des ersten Koppelstegs drehgelenkig mit einer ersten Seite des zweiten Mutternkörpers verbunden ist, ein erstes Ende eines zweiten Koppelstegs drehgelenkig mit einer zweiten Seite des ersten Mutternkörpers verbunden ist, und ein zweites Ende des zweiten Koppelstegs drehgelenkig mit einer zweiten Seite des zweiten Mutternkörpers verbunden ist.

Mittels der drehgelenkigen Verbindung des ersten Koppelstegs und des zweiten Koppelstegs mit dem ersten Mutternkörper und dem zweiten Mutternkörper bilden die beiden Koppelstege zusammen mit den beiden Mutternkörpern die Parallelogrammanordnung.

Die drehgelenkige Verbindung des ersten Endes des ersten Koppelstegs mit der ersten Seite des ersten Mutternkörpers, die drehgelenkige Verbindung des zweiten Endes des ersten Koppelstegs mit der ersten Seite des zweiten Mutternkörpers, die drehgelenkige Verbindung des ersten Endes des zweiten Koppelstegs mit der zweiten Seite des ersten Mutternkörpers und die drehgelenkige Verbindung des zweiten Endes des zweiten Koppelstegs mit der zweiten Seite des zweiten Mutternkörpers können jeweils durch ein einteilig mit dem ersten Mutternkörper und einteilig mit dem zweiten Mutternkörper ausgebildetes Festkörpergelenk gebildet werden.

Das Festkörpergelenk kann dünne Wandverbindungen aufweisen, welche den ersten Mutternkörper und den zweiten Mutternkörper einstückig verbinden. Sind der erste Mutternkörper und der zweite Mutternkörper als ein gemeinsames einteiliges Maschinenelement beispielsweise aus Kunststoff, wie z.B. Polyamid ausgebildet, so können die dünnen Wandverbindungen Filmscharniere bilden.

Sind der erste Mutternkörper und der zweite Mutternkörper als ein gemeinsames einteiliges Maschinenelement aus einem anderen Material als Kunststoff, insbesondere aus Metall hergestellt, so können die dünnen Wandverbindungen analog einer Ausbildung in Kunststoff in analoger Weise ähnlich wie Filmscharniere ausgebildet sein. So können der erste Mutternkörper und der zweite Mutternkörper beispielsweise aus einem Metallblock aus dem Vollen herausgefräst sein, wobei die beiden Mutternkörpern über dünne Wandverbindungen einteilig verbunden bleiben, wobei die dünnen Wandverbindungen in diesem Fall aus demselben metallischen Werkstoff bestehen, wie die beiden metallischen Mutternkörper. Alternativ können der erste Mutternkörper und der zweite Mutternkörper beispielsweise auch aus separaten metallischen Muttern gebildet werden, die mittels zwei oder mehreren zunächst separaten Metallzungen, wie beispielsweise Metallzungen aus Federstahl verbunden sind. Die Metallzungen können beispielsweise durch Kleben, Löten, Schweißen oder Nieten mit den ersten Mutternkörper und dem zweiten Mutternkörper verbunden sein.

Der Fingerträger kann bezüglich des Greifergrundkörpers in Längserstreckung des ersten Greiferfingers unabgestützt gelagert sein und zur Halterung des Fingerträgers am Robotergreifer in Längserstreckung des ersten Greiferfingers der Fingerträger über den ersten Mutternkörper und den zweiten Mutternkörper mit der Antriebsspindel verbunden sein.

Unter einer in Längserstreckung des ersten Greiferfingers unabgestützten Lagerung des Fingerträgers bezüglich des Greifergrundkörpers kann verstanden werden, dass der Fingerträger zwar generell an dem Greifergrundkörper oder in dem Greifergrundkörper gelagert ist, allerdings derart gelagert, dass der Fingerträger in Richtung der Längserstreckung des ersten Greiferfingers zumindest geringfügig beweglich d.h. verschieblich gelagert ist, so dass der Fingerträger in dieser Richtung der Längserstreckung des ersten Greiferfingers keine Kräfte in den Greifergrundkörper unmittelbar einleiten kann, sondern diese Kräfte nur über den ersten Mutternkörper und den zweiten Mutternkörper und die Antriebsspindel geführt in den Greifergrundkörper eingeleitet werden können.

Der erste Mutternkörper und der zweite Mutternkörper sind erfindungsgemäß mittels eines Schiebelagers in einem Rahmen gelagert sein, wobei das Schiebelagers ausgebildet ist, den ersten Mutternkörper und den zweiten Mutternkörper so zu lagern, dass sie unabhängig voneinander senkrecht zur Antriebsspindel in einer Ebene verschoben werden können und Antriebskräfte, axial zur Antriebsspindel an den Fingerträger weitergeleitet werden.

Eine Anbindung des ersten Mutternkörpers und des zweiten Mutternkörpers an den Fingerträger oder an den Rahmen kann erfolgen, indem ein am ersten Greiferfinger anliegendes Quermoment um die Längsachse des ersten Greiferfingers als ein Kräftepaar auf die Muttern übertragen wird, um den ersten Mutternkörper und den zweiten Mutternkörper entlang des Kräftepaares eine Parallelverschiebung ausführen zu lassen und das Kräftepaar an die Antriebsspindel weitergeben wird.

Der Fingerträger kann einen Käfig aufweisen, in dem der erste Mutternkörper und der zweiten Mutternkörper gelagert sind.

Der erste Mutternkörper und der zweiten Mutternkörper können in einem Rahmen gelagert sein, der um eine quer zur Längserstreckung des ersten Greiferfingers und quer zur Längserstreckung der Antriebsspindel ausgerichtete Schwenkachse schwenkbar in dem Käfig des Fingerträgers gelagert ist.

Zur schwenkbaren Lagerung des Rahmens in dem Käfig des Fingerträgers, kann der Rahmen zwei gegenüberliegende, voneinander wegweisende Zapfen aufweisen, welche drehbar in nabenartigen Aufnahmen des Käfigs geringfügig drehbar gelagert sind, um ein Schwenken des Rahmens in dem Käfig zuzulassen.

Das erste Gewinde, insbesondere ein erstes Innengewinde des ersten Mutternkörpers und das zweite Gewinde, insbesondere ein zweites Innengewinde des zweiten Mutternkörpers können jeweils als ein Trapezgewinde, insbesondere Trapezinnengewinde ausgebildet sein und demgemäß weist dann auch die Antriebsspindel ein zu dem ersten Gewinde und dem zweiten Gewinde korrespondierendes Trapezgewinde, insbesondere Trapezaußengewinde auf.

Indem erfindungsgemäß die Abtriebs-Spindelmutter einen ersten Mutternkörper aufweist, der ein zur Antriebsspindel korrespondierendes erstes Gewinde aufweist, einen zweiten Mutternkörper aufweist, der ein zur Antriebsspindel korrespondierendes zweites Gewinde aufweist, und der erste Mutternkörper mit dem zweiten Mutternkörper mittels einer Parallellenkeranordnung verbunden ist, die ausgebildet ist, den ersten Mutternkörper in einem vorbestimmten Abstand von dem zweiten Mutternkörper zu halten und dabei einen Parallelversatz des ersten Mutternkörpers von dem zweiten Mutternkörper zuzulassen, wird ein Robotergreifer geschaffen, der ein besonders zuverlässiges Getriebe aufweist, das ausgebildet ist, den ersten Greiferfinger des Robotergreifers zu bewegen, ohne dass sich das Getriebe und/oder der Greiferfinger verspannen und/oder verkanten kann, was zur Folge hätte, dass ein Bewegen des Greiferfingers gestört oder sogar blockiert wäre.

Über die erfindungsgemäße Lagerungskinematik werden demgemäß die Momente aufgenommen, die zur Folge haben, dass der bewegliche Greiferfinger nur senkrecht zu einer Ebene parallel verschonen werden kann (Momente um die x-Achse und y-Achse). Die beiden Kräfte entlang der Eben und das Moment bei einer Rotation des Greiferfingers in der Ebene (Moment um die z-Achse) werden von der Mechanik des Greifers nicht aufgenommen und müssen daher von der Antriebseinheit des Greiferfingers aufgenommen werden. Diese Kräfte können auch von der Spindel aufgenommen werden. Da die Lagerung des Greifers die Momente um x und y aufnimmt, sollte es zu keinem Verklemmen kommen. Um zu verhindern, dass eine Verformung des Fingerhalters um die Achse senkrecht zur Bewegungsrichtung zu einem Verklemmen führt (My), kann ein Rahmen eingebaut werden, der diese Drehung von den Mutternkörpern entkoppelt. Die beiden Bewegungsmöglichkeiten des Fingerträgers zur Spindel entsprechen einer kardanischen Aufhängung.

Die Antriebseinheit des Greifers, mit welcher der Greiferfinger bewegt wird, ist so gestaltet, dass Kräfte und Momente, die von der Mechanik des Greifers aufgenommen werden, die Gewindespindel nicht in ihrer Funktion behindern. Hierdurch wird die Funktion des Greifers sichergestellt. Ein Verklemmen in der Mechanik des Greifers hätte eventuell zur Folge, dass der Greifer durch den Antriebsmotor nicht mehr gelöst werden kann. Wenn sich der Antriebsstrang des Greifers verklemmt, wird ebenfalls ein Öffnen bzw. Schließen des Greifers verhindert.

Für eine Vereinfachung der Montage des Greifers und einer Vereinfachung der Fertigung der Einzelteile des Greifers können diese so aufgebaut sein, dass sie nur eine Passung enthalten und sich deren Position des Teils beim Einbau durch die Position der Umgebung ergibt.

Ein Teil der Kräfte und Momente wird von der Mechanik des Greifers aufgenommen und ein Teil muss von der Gewindespindel aufgenommen werden. Die Spindelmutter gleitet auf der Spindel. Das Gewinde der Spindel hat eine Form, die zum einen die Übertragung von hohen Kräften in Vorschubrichtung ermöglicht und zum anderen Kräfte normal zur Oberfläche der Spindel übertragen kann, z.B. Trapezgewinde.

Aktiv wird vom Antrieb die Greifkraft Fx durch die Rotation der Antriebsspindel erzeugt. Das Moment um die Spindelmutter, erzeugt durch die Reibung an der Spindel, wenn diese gedreht wird, wird über die Führung des Fingers in der Kinematik aufgenommen (Mx). Die Kräfte Fx und Fz, die normal zur Spindel verlaufen, werden von dieser aufgenommen. Ebenso wird das Moment Mz um die Längsachse des bewegten Fingers, die koaxial zu einer freien Lagerung der Führung verläuft, von der Antriebseinheit aufgenommen.

Als einfache Gewindespindel kann eine Gleitlagergewindespindel mit Trapezgewinde eingesetzt werden. Ein Trapezgewinde ermöglicht in Kombination mit einer Umlaufenden Mutter aus einem Werkstoff mit guten Gleiteigenschaften die Aufnahme von Kräften normal zur Oberfläche der Spindel (Fz, Fy).

Um eine nicht eindeutige Kraftverteilung zu verhindern, sollte sichergestellt werden, dass die Kräfte (Fx, Fz, Fy) nur von der Gewindespindel und nicht von der Kinematik des Greifers aufgenommen werden.

Die Kraft in Fx Richtung ist die Antriebskraft. Eine Kraft in x-Richtung wird von der Mechanik des Greifers somit nicht aufgenommen. Dies verfügt immer über einen Hebel zur Lagerung und der Mittelpunkt der Lagerung hat immer einen Hebel zu der anderen Lagerung des Greifers hat. Daher führt eine Antriebskraft zu einem Moment um die beiden Lagerungen, die diese bewegen d.h. mitbewegen.

Die Lagerung des dritten Freiheitsgrades der Mechanik wird über ein Quermoment von der Spindel gedreht, das entsteht wenn die Spindel die Mutter dreht. Die Antriebskraft Fx, die von der Spindel aufgebracht wird, wird auf das Greifobjekt übertragen. In der Kinematik können deshalb nur Kräfte in x-Richtung aufgenommen werden, die aus den Reibungskräften der Lagerungen resultieren und die daher immer einen dynamischen Beitrag benötigen, was nicht der Fall ist, wenn das Objekt gegriffen ist. Im Ergebnis steht die Antriebskraft Fx, die von der Spindel ausgeht, als Klemmkraft des Greifers komplett zur Verfügung.

Die Lagerung des Fingerträgers in der Kinematik des Greifers ist in y-Richtung, genauso wie in x-Richtung, frei beweglich und kann daher keine Kräfte in diese Richtung aufnehmen, mit Ausnahme der Kräfte aufgrund der Reibung in den Lagerungen, die im statischen Greifzustand nicht vorhanden sind. Im Ergebnis wird die Kraft in y-Richtung komplett auf die Spindel übertragen.

Der Anschluss der Führung des Fingers an die Mechanik des Greifers ist in z-Richtung frei beweglich. Im Ergebnis wird die Kraft in z-Richtung komplett auf die Spindel übertragen.

Eine Rotation der Greiferfinger um die Längsachse wird nicht von der Kinematik des Greifers aufgenommen, da die Drehachse y frei bewegliche ist. Daher wird dieses Moment komplett auf die Spindel übertragen.

Eine Trapezgewindespindel beispielsweise kann radiale Kräfte gut aufnehmen, aber schlechter Momente quer zur Längsachse, da diese dazu führen, dass die Mutter zu Längsachse tordiert, was zu einem Verklemmen der Spindel führen kann. Dem kann entgegengewirkt werden, indem die Spindelmutter eine ausreichend große Länge aufweist. Allerdings verringert sich der Bewegungsraum des beweglichen Greiferfingers in der Führung durch eine Verlängerung der Mutter, so dass diese nicht beliebig verlängert werden kann.

Um mit der Mutter ein Quermoment zu übertragen, ohne dass sie sich verklemmt und dabei die Mutter gleichzeitig kurz zu halten, wird die Mutter in sich erfindungsgemäß zweigeteilt. Der Übergang vom Greiferfinger zur Mutter ist so gestaltet, dass das Moment mit einem Kräftepaar auf die zweigeteilte Mutter übertragen wird. Dieses Kräftepaar hat zur Folge, dass beide Muttersegmente, d.h. der erste Mutternkörper und der zweite Mutternkörper, die Gegenkräfte als reine Radialkräfte überragen, so dass es nicht zu einer Torsion der Mutter auf der Spindel kommen kann.

Da beide Segmente der Mutter zusammen die Greifkraft übertragen, muss sichergestellt werden, dass sie im Betrieb ihren Abstand zueinander nicht verändern, da dies ebenfalls zu einem Verklemmen der Spindel im Gewinde führt. Aus diesem Grund werden beide Segmente der Mutter durch einen oder mehrere Stege miteinander verbunden, die eine Parallelverschiebung der beiden Teile zueinander aufgrund des Kräftepaares zulassen. Diese Kinematik der Mutter ermöglicht eine Übertragung von Momenten in z-Richtung auf den Finger, ohne dass die Mutter tordiert wird.

Eine Möglichkeit hierfür besteht aus zwei Stegen, die den Abstand der beiden Muttersegmente festlegen und einen parallelen Versatz der Segmente ermöglichen.

Das Bauteil des bewegten Fingers, das mit der Mutter in Kontakt steht ist so gestaltet, dass ein Moment um die Längsachse des Fingers als Kräftepaar auf die beiden Muttersegmente übertragen wird.

Ein Moment am Finger um die x-Achse wird von der Mutter nicht auf die Spindel übertragen, da es sich bei dieser Rotation um den Freiheitsgrad des Antriebs handelt. Dieses Moment wird von der Kinematik des Greifers aufgenommen.

Ein Moment am Finger um die y-Achse entsteht z.B., wenn der Greifer einen Gegenstand gegriffen hält. Ein Moment um die y-Achse wird von der Mechanik des Greifers übertragen. Ein Moment um die y-Achse wird von einer Mutter auf die Spindel übertragen.

Um eine gegenseitige Beeinflussung zu verhindern, gibt es zwei Möglichkeiten:
a) Die Mutter ist über ein Zwischensegment mit dem Finger verbunden, dass Kräfte in x, y und z-Richtung übertragen kann und Momente um die z-Achse. Das Zwischensegment ist über Rundzapfen an den Finger angeschlossen, über die um die y-Achse kein Moment übertragen werden kann.
b) Die Mechanik des Greifers ist gegenüber Momenten am Finger um die x-Achse und y-Achse sehr steif und verursacht nur eine geringe Verformung bei diesen Momenten. Die Mutter weist zu der Spindel Spiel bezüglich einer Verschiebung in der Richtung normal zur Spindelachse auf und kann auch auf der Spindel um ein Stück tordiert werden. Die maximale Verformung der Mechanik des Greifers aufgrund einem Moment um die y-Achse ist kleiner als das Spiel zwischen Mutter und Spindel bei dieser Bewegung.

Die beiden Lagerungsachsen (beide liegen in einer Ebene) der ersten und zweiten Drehachsen sind jeweils über einen Steg miteinander verbunden. Egal welche Position der Greiferfinger einnimmt, führt ein Moment um die x-Achse oder y-Achse zu einer Torsion oder einer Verformung dieses Steges und der Verbindungen zwischen Steg und Lager. Da diese Bauteile für diese Belastungen ausreichend strak dimensioniert sind, ist der Greifer gegenüber diesen Belastungen steif.

In einem vereinfachten Modell werden die Momente um die x-Achse und y-Ache mit zwei Segmenten in U-Form aufgenommen. Diese U-Segmente werden ja nach Gelenkstellung und Belastungsrichtung in Längs- oder Querrichtung tordiert. Im Ergebnis wird dieses Moment um die y-Achse von der Kinematik des Greifers aufgenommen.

Eine Gleitlagergewindespindel kann mit der entsprechend geringen Steigung so aufgebaut werden, dass sie selbsthalten ist. Dies bewirkt, dass Greifer wenn er etwas gegriffen hat und ein Energieausfall auftritt, das Greifobjekt trotzdem gegriffen bleibt. Weiterhin wird dadurch gewährleistet, dass ein Gegenstand auch bei einem Stromausfall sicher im Griff gehalten wird.

Der angetriebene Finger wird vom Antrieb und von der Lagerung des Greifers geführt. Dies ist konstruktiv so zu gestalten, dass ein Verklemmen der Mechanik des Greifers und/oder des Antriebs verhindert ist, was sonst für einen Funktionsausfall führen könnte.

Bei der Spindelmutter kann es sich zusammenfassend um eine Gewindespindelreibmutter handeln, die Quermomente in Fingerlängsrichtung aufnehmen kann, ohne sich zu verklemmen. Hierfür ist die Mutter so zweigeteilt, dass sie nur einen Parallelversatz zulässt. Über die Aufnahme der Mutter in der Fingerführung wird ein angreifendes Moment in Längsrichtung des Fingers in ein Kräftepaar aufgeteilt. Die Einzelkräfte werden über die Mutter als Normalkräfte an die Spindel übertragen, die dadurch nicht verklemmt. So können die auf den Greiferfinger einwirkenden Kräfte und Momente in alle Richtungen im Greifergrundkörper eindeutig aufgenommen werden.

Der Robotergreifer kann in einer speziellen Ausführung aufweisen: einen ersten Greiferfinger und wenigstens einen zweiten Greiferfinger, einen Greifergrundkörper, ein Basisglied, welches mittels eines ersten Drehgelenks um eine erste Drehachse drehbar bezüglich des Greifergrundkörpers gelagert ist, und ein Zwischenglied, welches mittels eines zweiten Drehgelenks bezüglich des Basisglieds drehbar gelagert ist und zwar um eine zweite Drehachse, die parallel zur ersten Drehachse ausgerichtet und in einem konstanten ersten Abstand von der ersten Drehachse angeordnet ist, wobei der Fingerträger mittels eines dritten Drehgelenks bezüglich des Zwischenglieds drehbar gelagert ist und zwar um eine dritte Drehachse, die parallel sowohl zur ersten Drehachse als auch zur zweiten Drehachse ausgerichtet und in einem konstanten zweiten Abstand von der zweiten Drehachse angeordnet ist, wobei die Antriebsvorrichtung separat von dem ersten Drehgelenk, dem zweiten Drehgelenk und dem dritten Drehgelenk ausgebildet ist, sich gegen den Greifergrundkörper abstützt und die ausgebildet ist, den Fingerträger relativ zum zweiten Greiferfinger mit einer Antriebskraft zu verstellen, die über den ersten Mutternkörper und den zweiten Mutternkörper in den Fingerträger eingeleitet wird.

Die Greiferfinger weisen generell Längsachsen auf, die quer zur Greiferbewegungsrichtung verlaufen, wobei der bewegliche Greiferfinger relativ zum Greifergrundkörper Rotationsbewegungen um Drehachsen ausführt, die parallel zu der Längsachse des Greiferfingers ausgerichtet sind. Die Rotationsbewegungen können Bewegungsanteile aufweisen, die Drehungen des Greiferfingers um seine Längsachse und Bewegungen des Greiferfingers auf jeweiligen Kreisbahnen umfassen können. Die Drehungen um die Längsachse und die Bewegungen auf den jeweiligen Kreisbahnen können sich zu einer Gesamtbewegung des Greiferfingers überlagern. Die erste Drehachse, die zweite Drehachse und die dritte Drehachse sind derart am Greifergrundkörper gelagert, dass stets wenigstens eine der drei Drehachsen in einem Abstand zu den anderen Drehachsen angeordnet ist, d.h. die erste Drehachse, die zweite Drehachse und die dritte Drehachse niemals alle drei miteinander fluchten und somit zusammenfallen. Die Greiferfinger weisen jeweils eine leistenförmige Grundgestalt auf, die sich in Richtung ihrer Längsachsen erstrecken, wobei der bewegliche Greiferfinger aufgrund der Rotationsbewegungen mittels der ersten Drehachse, der zweiten Drehachse und der dritten Drehachse quer zu seiner Längsachse, d.h. quer zu seiner leistenförmigen Grundgestalt auf die anderen Greiferfinger zu und/oder von diesen weg bewegt werden kann. Die Grundkörper der leistenförmigen Greiferfinger können insbesondere starr ausgebildet sein.

Indem der Robotergreifer eine von dem ersten Drehgelenk, dem zweiten Drehgelenk und dem dritten Drehgelenk separate Antriebsvorrichtung aufweist, die sich gegen den Greifergrundkörper abstützt und die ausgebildet ist, den Fingerträger relativ zum zweiten Greiferfinger mit einer Antriebskraft zu verstellen, die über die Antriebsvorrichtung in den Fingerträger eingeleitet wird, kann ein noch einfacherer und noch zuverlässigerer mechanischer Aufbau des Robotergreifers erreicht werden, der noch weniger zu Verspannungen oder Verklemmungen des Getriebes neigt. Dies wird insbesondere dadurch erreicht, dass die Antriebskraft nicht über das erste Drehgelenk, das zweite Drehgelenk und das dritte Drehgelenk geleitet wird, also über keines der vorhandenen Drehgelenke geführt wird, sondern vielmehr unmittelbar von dem Greifergrundkörper in den Fingerträger und damit in den ersten Greiferfinger eingeleitet wird. Die Antriebskraft wird demgemäß ausschließlich über die Antriebsvorrichtung geführt und nicht über die Lagerung, welche das Basisglied und das Zwischenglied umfasst. Ein weiterer Aspekt besteht darin, dass trotz gleichbleibender konstruktiver Ausführung der Lagerung, d.h. des ersten Drehgelenks, des zweiten Drehgelenks und des dritten Drehgelenks, die Antriebsvorrichtung je nach gewünschter Bewegungsbahn für die Bewegung des ersten Greiferfingers konstruktiv unterschiedlich ausgebildet sein kann. Eine Antriebsvorrichtung einer ersten bestimmten Bewegungsart kann bspw. durch eine andere Antriebsvorrichtung einer zweiten Bewegungsart auf einfache Weise ersetzt werden, ohne die Lagerungen, d.h. die drei Drehgelenke oder das Basisglied bzw. das Zwischenglied ersetzen zu müssen. Eine erste Bewegungsart kann beispielsweise eine geradlinige Bewegung sein, die der erste Greiferfinger dadurch ausführt, dass er direkt auf den zweiten, insbesondere feststehenden Greiferfinger auf kürzestem Weg zubewegt wird. Eine zweite, andere Bewegungsart kann beispielsweise eine Bewegung des ersten Greiferfingers auf einer schrägen oder kreisbogenförmigen Bahn sein.

Erreicht wird dies durch die Art der Lagerung der bewegten Teile, insbesondere des Basisglieds, des Zwischenglieds und des Fingerträgers. Die Lagerungsstellen, die beispielsweise durch Unterlager und Oberlager gebildet werden können, können einen deutlichen Abstand zueinander aufweisen. Über diese Art der Lagerung kann eine Entkopplung der Lagerungskraft von der Greifkraft erfolgen, die vom Antrieb, d.h. von der separaten Antriebsvorrichtung aufgebracht wird. Eine Entkopplung tritt auch bei einem einseitigen Lager auf, das Momente in beide Richtungen aufnehmen kann. Die Lagerungskraft nimmt das Moment auf, welches aufgrund der Länge der Greiferfinger (Greiferbacken) am Greifergrundkörper nahem Ende der Greiferfinger anliegt. Das Moment wird bauartbedingt vor allem über ein Kräftepaar aufgenommen, deren Kraftrichtungen parallel zu der Backenschließkraft wirkt und nicht senkrecht dazu, wie es z.B. bei bekannten Standard-Linearführungen der Fall ist.

Im Unterschied zu anderen Greifern kann der Robotergreifer in einer speziellen Ausführungsvariante eine von der Lagerung separate Antriebsvorrichtung aufweisen. Während sonst die drei Drehgelenke der Lagerung direkt jeder für sich angetrieben werden oder die drei Drehgelenke der Lagerung über feste Getriebe miteinander gekoppelt sind und somit durch einen gemeinsamen Antrieb angetrieben werden, werden beim erfindungsgemäßen Robotergreifer die drei Drehgelenke der Lagerung passiv mitgeführt und übernehmen in dieser Konfiguration nur die Funktion Lagerung der bewegten Greiferfinger. Ein Bewegen des ersten, beweglichen Greiferfingers erfolgt mittels der erfindungsgemäßen Antriebsvorrichtung direkt durch unmittelbares Verstellen des ersten Greiferfingers durch die Antriebsvorrichtung und gibt dort die Bahn direkt vor, auf der sich der Greiferfinger bewegen soll. Wenn der Greiferfinger sich auf einer linearen Bahn wegen soll, kann ein Antrieb des ersten Greiferfingers durch eine Antriebsvorrichtung erfolgen, die beispielsweise eine Gewindespindel wie beschrieben aufweisen kann.

Der Robotergreifer verfügt über wenigstens zwei Backen, d.h. Greiferfinger, die sich in einer Ausführungsform linear zueinander bewegen können. Die eine Backe ist starr zur Basis des Greifers, mit der der Greifer am Flansch eines Roboters montiert wird angeordnet, und die andere Backe kann sich bewegen. Diese Konfiguration ermöglicht einen exakten Griff, auch wenn die Bewegung der einen beweglichen Backe ungenau ist.

Das zu greifende Objekt wird aktiv von der bewegten Backe gegen die relativ zur Basis des Greifers statische Backe gedrückt. Da die Position der unbeweglichen Backe exakt bekannt ist, ist auch die Position des gegriffenen Objektes exakt bekannt.

Die Lagerung einer solchen Linearbewegung erfolgt über drei ineinander verschachtelte Rotationen. Die Durchmesser und Position der drei seriell verbauten Lagerungen können so aufeinander abgestimmt sein, dass eine Bewegung der bewegten Backe auf der vorgesehenen Bahn möglich ist.

Um die Aufnahme von Momenten durch die Lagerung zu ermöglichen, die durch die Greifbackenlänge und der Greifkraft verursacht werden, werden entweder Lagerungen verbaut, die Momente aufnehmen können, wie z.B. Vierpunktlager, oder es werden zwei Lagerungseinheiten verbaut, die einen Abstand zueinander aufweisen.

Lagerungseinheiten, die einen Abstand zueinander aufweisen, können beispielsweise aus einem Paar von Lagerungseinheiten gebildet werden, wobei eine Lagerungseinheit (in z-Richtung) in einer oberen Ebene (Oberlager) und die andere Lagerungseinheit (in z-Richtung) in einer unteren Ebene (Unterlager) angeordnet ist. Die Innendurchmesser der Lagerungen in der unteren Eben sind so groß, dass die Lagerung des Zwischenglieds den Fingerträger und die Lagerung des Basisglieds das Zwischenglied so umschließt, dass der Fingerträger, der auf einem Bauteil befestigt ist, das durch die Lagerung der unteren Ebene zur Spindelmutter reicht, auf der durch den Antrieb vorgegebenen Bahn verfahren kann. Die Innendurchmesser der Lagerungen in der oberen Ebene können einen kleineren Durchmesser aufweisen, da sie die seriell nachfolgenden Lager nicht umschließen müssen, da in der oberen Lagerungsebene kein Bauteil auf der Fingerachse des bewegten Fingers die obere Lagerungsebene überquert. Die Lager mit einem größeren Durchmesser können auch so gestaltet sein, dass sie Momente ohne ein zweites Oberlager aufnehmen können, beispielsweise durch Kreuzrollenlager oder Vierpunktlager. Diese Lagerung kann hohe Momente aufgrund des Durchmessers der Lager aufnehmen. Weiterhin wird dadurch ein Verdrehen der Lageroberseite zur Lagerunterseite konstruktiv ausgeschlossen.

Die Antriebsvorrichtung weist einen Motor und eine am Greifergrundkörper um eine Spindelachse drehbar gelagerte und von dem Motor drehangetriebene Antriebsspindel auf. Auf der Antriebsspindel ist eine Abtriebs-Spindelmutter entlang der Spindelachse linear verstellbar gelagert, wobei die Abtriebs-Spindelmutter zum Bewegen des Fingerträgers durch ein Antreiben des Motors an den Fingerträger angekoppelt ist.

In einer anderen Variante kann der Robotergreifer eine Linearführung aufweisen, die ausgebildet ist, den Fingerträger bezüglich des Greifergrundkörpers mittels einer zweiwertigen ersten Lagerung zur Aufnahme von Kräften derart geführt zu lagern, dass der Fingerträger nur in Richtung der Spindelachse verstellbar ist, wobei der Fingerträger mittels einer einwertigen zweiten Lagerung an die Abtriebs-Spindelmutter zur Kraftübertragung über den ersten Mutternkörper und den zweiten Mutternkörper angekoppelt ist.

Der Robotergreifer kann demgemäß in einer speziellen Ausführungsvariante eine einwertige Drehmomentabstützung aufweisen, die ausgebildet ist, den Fingerträger bezüglich des Greifergrundkörpers lediglich um einen einzigen Drehfreiheitsgrad zur Aufnahme von Drehmomenten um eine Längserstreckung des ersten Greiferfingers zu lagern, wobei der Fingerträger mittels des ersten Drehgelenks, des zweiten Drehgelenks und des dritten Drehgelenks in den beiden anderen Drehfreiheitsgraden des Fingerträgers abgestützt ist. Diese Abstützung kann auch eine Abstützung in y-Richtung ermöglichen und ist dann zweiwertig.

Wenn die Lagerung eines oder mehrerer Achskörper, d.h. des Basisglieds, des Zwischenglieds und/oder des Fingerträgers, auf zwei Ebenen parallel zueinander verteilt ist, können Kippmomente auf die Backen zu einem Verdrehen der beiden Lagerungen relativ zueinander führen. Um dies zu verhindern können Segmente von beiden Ebenen, die die gleichen Bewegungen durchführen miteinander starr verbunden werden. Die verbindenden Zwischensegmente, wie beispielsweise Zapfen, sind dabei in ihrer Form so auszuführen, dass sie die beiden Segmente möglichst starr bezüglich einer Torsion um die gemeine Drehachse verbinden.

In allen Ausführungen kann der Robotergreifer eine Einrichtung zur Umgehung von den ersten Mutternkörper und den zweiten Mutternkörper drehmomentbelastenden Singularitätsstellungen aufweisen, bei denen die erste Drehachse mit der dritten Drehachse fluchtet, aufweisend ein Zwangsmittel, das ausgebildet ist, eine Bewegung des Basisglieds um die erste Drehachse zu behindern, bei der die zweite Drehachse relativ zur ersten Drehachse unbeweglich ist, so dass eine von der Antriebsvorrichtung eingeleitete Antriebskraft im Bereich der Singularität dazu führt, dass die Drehbewegung der zweiten Drehachse größer ist als die der ersten.

Eine Lagerung auf einer Ebene mit mindestens zwei parallelen Drehachsen weist Singularitäten auf. Wenn die Abstände zwischen den drei seriell aufeinander folgenden Drehachsen gleich sind, gibt es eine Position, bei der zwei Drehachsen koaxial aufeinander liegen, in der beliebig viele Gelenkstellungen auftreten können. Beim Durchfahren der singulären Position mit der Backe entlang einer Bahn gibt es zwei Gelenkstellungen, welche die Gelenke einnehmen können. Dies hat zur Folge, dass bei einem führenden Antrieb der bewegten Backe die Winkelstellung der Gelenke nicht mehr eindeutig ist.

Damit die Gelenkbahnen eindeutig von außen über einen Antrieb mit einem Freiheitsgrad geschoben werden können, sind Zwangsbedingungen einzuführen. Solange sich die bewegte Backe nicht in der Singularität befindet, sind die sich einstellenden Gelenkwinkel beim Bewegen der Backe auf einer Bahn eindeutig. Beim Durchfahren der Singularität können jedoch zwei unterschiedliche Konfigurationen angefahren werden, die dann bei einem weiteren Verfahren wieder eindeutig sind.

Wenn die Abstände zwischen der ersten Drehachse und der zweiten Drehachse, und zwischen der zweiten Drehachse und der dritten Drehachse gleich groß sind, können in der Singularität beliebig viele Gelenkstellungen angefahren werden. Dies ist aber nur möglich, wenn das Basisglied durch eine externe Kraft gedreht wird, was im normalen Betrieb nicht erfolgt. Damit auch bei einem Durchfahren der Singularität die Gelenkstellungen eindeutig werden, ist eine Bewegung des einen Drehgelenks gegenüber dem anderen Drehgelenk zu behindern. Eine solche Behinderung dieser passiv von außen angetriebenen Bewegungen kann über eine Mechanik auf unterschiedliche Weise erfolgen.

Beim Durchfahren der Singularität verlaufen beide Geraden zwischen der ersten Drehachse und der zweiten Drehachse, sowie der zweiten Drehachse und der dritten Drehachse parallel, auch wenn sie nicht gleich groß sind. Beim Schieben des Fingers über einen Antrieb, der an der Backe angreift, werden die Gelenke über ein Moment passiv bewegt, das sich aus der Antriebskraft und einem Hebelarm, der senkrecht auf der Bewegungsrichtung steht ergibt. Da in der betrachteten Singularität die Abstände zwischen den Drehachsen senkrecht auf der Bewegungsachse stehen, entsprechen die Abstände zwischen der ersten Drehachse und der zweiten Drehachse bzw. zwischen der zweiten Drehachse und der dritten Drehachse, den Hebelarmen für das Antriebsmoment der ersten und zweiten Drehachsenachse.

Wenn die Singularität durchfahren wird und die beiden Abstände zwischen den Drehachsen gleich oder ähnlich groß sind, das größere Lager z.B. durch seine Größe einen größeren Reibwiderstand aufweist, als das kleine Lager, dann wird die Gelenkbahn vermieden, in der das große Lager einen größeren Gelenkwinkel zurücklegen muss, als das kleine Lager, zugunsten der Gelenkbahn, in der das kleine Lager einen größeren Gelenkwinkel zurücklegen muss, als das große Lager.

Bei einem Weiterfahren können zwei Konfigurationen auftreten, wobei in der ersten Konfiguration das kleine Lager einen größeren Gelenkwinkel zurücklegt als das große Lager und in der anderen Konfiguration das große Lager einen größeren Gelenkwinkel zurücklegen muss, als das kleine Lager. Da das große Lager einen größeren Reibungswiderstand aufweist, als das kleine Lager, wird sich die Bahn einstellen, bei der sich beim kleineren Lager eine größere Drehbewegung als beim großen Lager ergibt.

Das Zwangsmittel kann einen mit dem Greifergrundkörper verbundenen Reibkörper und einen mit dem Basisglied verbunden Gegenreibkörper aufweisen, wobei der Reibkörper und der Gegenreibkörper derart ausgebildet und angeordnet sind, dass bei einer Annäherung der ersten Drehachse an die dritte Drehachse der Reibkörper und der Gegenreibkörper in einen Reibkontakt treten, welcher ein Weiterdrehen des Basisglieds behindert.

Wenn sich die Backe in der Singularität befindet, berührt das eine Segment einen Widerstandkörper am Grundkörper, der in dieser Position die Drehreibung des großen Lagers erhöht und es in seiner Bewegung behindert. Aus diesem Grund wird sich ebenfalls die Situation einstellen, in der sich das kleine Lager einen größeren Gelenkwinkel verdreht.

Wenn die Abstände zwischen beiden Drehachsen gleich groß sind und die Backe auf einer Geraden verfahren wird, die durch den Mittelpunkt der ersten Lagerung führt, dann gibt es einen Punkt im zweiten Segment, der sich auch auf einer Geraden bewegt, die senkrecht auf der Bahn des bewegten Backe steht. Dieser Punkt ist der am Mittelpunkt der zweiten Lagerung gespiegelte Drehpunkt der dritten Lagerung.

Wenn sich die Gelenkmechanik in der Singularität befindet, und die jeweiligen Abstände zwischen benachbarten Drehachsen gleich groß sind, ist es möglich, dass sich das erste Segment und das zweite Segment gemeinsam bewegen, ohne dass sich die Position der dritten Drehachse verändert. Nach einem Überqueren der Singularität auf einer Bahn, kann die Bahn mit zwei unterschiedlichen Gelenkkonfigurationen angefahren werden. Hierfür muss der Punkt auf dem zweiten Segment auf die andere Seite der Geraden springen, auf der er verläuft. Dies kann durch eine Führung dieses Punktes auf der Geraden verhindert werden. An der Stelle des Punktes wird das zweite Segment mit einem Zapfen verbunden, der z.B. links und rechts von Anschlägen in der Basis des Greifers auf seiner Bahn gehaltente wird. Die Führung kann Kräfte in Richtung der Bewegung des Greiferfingers oder entgegen der Bewegung des Greiferfingers aufnehmen.

Das Zwangsmittel kann einen mit dem Zwischenglied verbundenen Zapfen und einen mit dem Greifergrundkörper verbundenen Gabelkörper aufweisen, der eine Ausnehmung umfasst, wobei der Gabelkörper und der Zapfen derart ausgebildet und angeordnet sind, dass bei einer Annäherung von erster Drehachse und dritter Drehachse der Zapfen in die Ausnehmung des Gabelkörpers eingreift, um durch eine formschlüssige Kopplung des Greifergrundkörpers mit dem Zwischenglied ein Weiterdrehen des Zwischenglieds zu erzwingen.

Da das Zwangsmittel nur wirken muss, wenn sich die Greifermechanik in der zentralen Singularität befindet, kann dieses durch formschlaffe Elemente gebildet werden, die nur Kräfte in der singulären Gelenkstellung übertragen können. Eine Möglichkeit hierfür ist das Anbringen von zwei gegenüberliegenden Seilen zwischen dem Greifergrundkörper und dem Zapfen derart, dass die beiden Seile nur in der Position des Zapfens gestreckt sind, wenn sich die Gelenkmechanik in der Singularität befindet und der Zapfen damit von der ersten Drehachse maximal weit entfernt ist und darüber Kräfte auf den Zapfen übertragen werden können, die eine gemeinsame Rotation vom Zwischenglied und dem Basisglied verhindern.

In solchen Ausführungen mit beispielsweise formschlaffen Elementen, wie Seilen wird das zweite Segment nur beim Durchfahren der Singularität stabilisiert und damit sind die Gelenkwinkel in allen Orten der Bewegungsbahn eindeutig. Auch durch eine zusätzlich von außen aufgebrachte Kraft ist es nicht möglich andere Gelenkwinkel vorzugeben, da die Führung formschlüssig ist. Dies ist vorteilhaft gegenüber einer Stabilisierung durch Reibungskräfte, da diese durch zusätzliche Kräfte von außen auf den Greifer überbrückt werden könnten, was im Weiteren zu einem Verklemmen des Greifers führen könnte.

Der Zapfen kann durch den die erste Kreisringscheibe mit der zweiten Kreisringscheibe verbindenden Verbindungssteg gebildet werden.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters in Art eines Sechsachs-Knickarmroboters;
- Fig. 2: eine perspektivische Ansicht eines Robotergreifers mit einem ersten, verstellbaren Greiferfinger und einem zweiten, starren Greiferfinger;
- Fig. 3: eine Draufsicht von unten auf den Robotergreifer gemäß Fig.2;
- Fig. 4: eine schematische Schnittdarstellung des Robotergreifers gemäß Fig. 2;
- Fig. 5a-c: schematische Darstellungen beispielhafter, erfindungsgemäßer Antriebs-Spindelmuttern mit einem ersten Mutternkörper und einem zweiten Mutternkörper;
- Fig. 5d-e: schematische Darstellungen zweier Varianten von Robotergreifern mit zwei Greiferfingern, die zueinander verstellt werden können, durch Bewegen beider Greiferfinger oder durch Bewegen lediglich eines einzelnen Greiferfingers;
- Fig. 5f: eine schematische Darstellung, wie ein am Greiferfinger anliegendes Quermoment um die Längsachse des Greiferfingers in ein Kräftepaar an den Antriebsmuttern umgewandelt wird, und wie dies zu keiner Schrägstellung der Muttern auf der Spindel führt;
- Fig. 5g-i: verschiedene Lagerungen der Spindelmuttern im Fingerträger oder im Rahmen.
- Fig. 6a-b: schematische Darstellungen beispielhafter, erfindungsgemäßer Antriebs-Spindelmuttern mit Käfig und Rahmen;
- Fig. 7a-c: eine schematisch dargestellte Abfolge in drei Schritten einer Bewegung des ersten Greiferfingers über eine Antriebs-Spindelmutter mit einem ersten Mutternkörper und einem zweiten Mutternkörper;
- Fig. 8: eine perspektivische Teildarstellung des Inneren eines Robotergreifers mit einem Oberlager, das stabförmige Hebel aufweist,
- Fig. 9: eine perspektivische Schnittdarstellung des Inneren eines gegenüber Fig. 8 abgewandelten Robotergreifers, bei dem der bewegliche Greiferfinger am jeweiligen Oberlager und Unterlager jeweils zwischen zwei parallelen Linearführungen geführt ist,
- Fig. 10: eine schematische Darstellung eines beispielhaften Robotergreifers in einer Singularitätsstellung mit einem Zwangsmittel, das zwei Seile umfasst,
- Fig. 11: eine schematische Darstellung eines reibschlüssigen Zwangsmittels des Robotergreifers;
- Fig. 12: eine schematische Darstellung eines formschlüssigen Zwangsmittels des Robotergreifers; und
- Fig. 13-17: eine Abfolge von Einzelsituationen von räumlichen Positionen eines Gabelkörpers und eines Zapfens eines speziellen formschlüssigen Zwangsmittels des Robotergreifers.

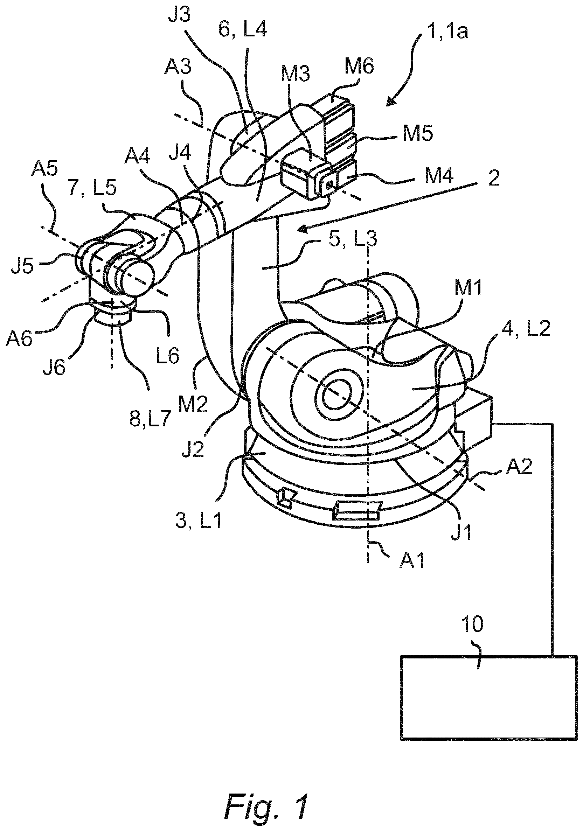

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Motoren M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines erfindungsgemäßen Robotergreifers 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Motoren M1 bis M6 über die Robotersteuerung 10 programmgesteuert antreibbar. Generell kann dazu zwischen jedem der Glieder L1 bis L7 und dem jeweils zugeordneten elektrischen Motoren M1 bis M6 ein Getriebe vorgesehen sein.

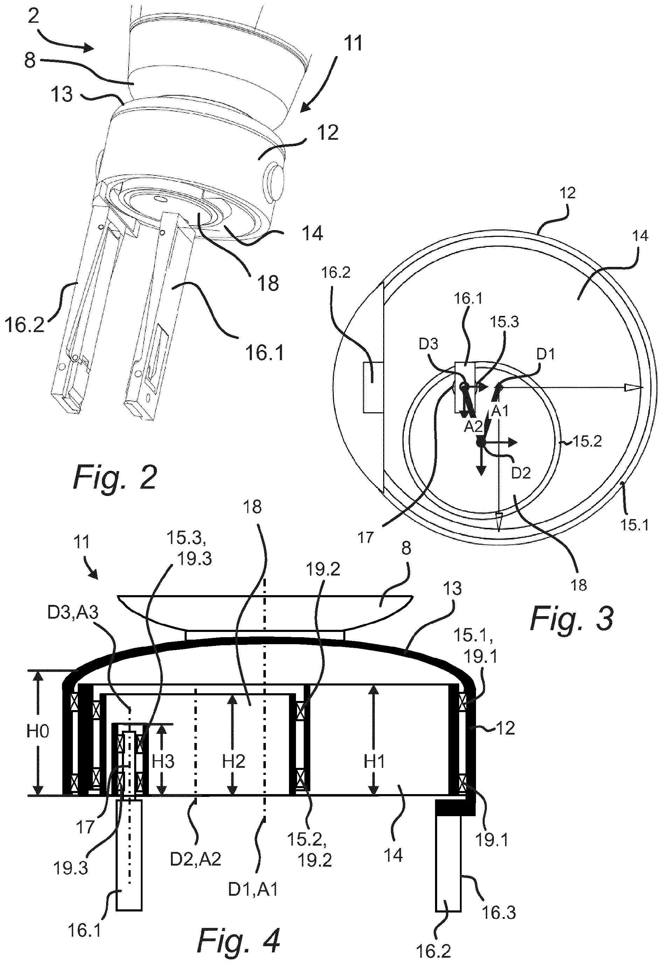

Die Fig. 2 zeigt eine Ausführungsform eines erfindungsgemäßen Robotergreifers 11, der einen ersten Greiferfinger 16.1 und einen zweiten Greiferfinger 16.2 aufweist. Der Robotergreifer 11 umfasst einen Greifergrundkörper 12, ein Basisglied 14, welches bezüglich des Greifergrundkörpers 12 drehbar gelagert ist, und ein Zwischenglied 18, welches bezüglich des Basisglieds 14 drehbar gelagert ist. Der Robotergreifer 11 umfasst außerdem einen Fingerträger 17 (Fig.3), der den ersten Greiferfinger 16.1 trägt und der im Falle des vorliegenden Ausführungsbeispiels bezüglich des Zwischenglieds 18 drehbar gelagert ist. Der Robotergreifer 11 weist einen Anschlussflansch 13 auf, der zur Befestigung des Robotergreifers 11 an dem Werkzeugflansch 8 des Roboterarms 2 ausgebildet ist.

In der Fig. 3 ist der Robotergreifer 11 in einer Draufsicht von unten gezeigt, d.h. die Greiferfinger 16.1 und 16.2 weisen aus der Zeichnungsebene entgegen der Blickrichtung nach vorne heraus. Der Robotergreifer 11 weist den ersten Greiferfinger 16.1 und den zweiten Greiferfinger 16.2 auf, sowie den Greifergrundkörper 12 und das Basisglied 14. Das Basisglied 14 ist mittels eines ersten Drehgelenks 15.1 um eine erste Drehachse D1 drehbar bezüglich des Greifergrundkörpers 12 gelagert. Das Zwischenglied 18 ist mittels eines zweiten Drehgelenks 15.2 bezüglich des Basisglieds 14 drehbar gelagert und zwar um eine zweite Drehachse D2, die parallel zur ersten Drehachse D1 ausgerichtet und in einem konstanten ersten Abstand A1 von der ersten Drehachse D1 angeordnet ist. Der Fingerträger 17, der den ersten Greiferfinger 16.1 trägt ist mittels eines dritten Drehgelenks 15.3 bezüglich des Zwischenglieds 18 drehbar gelagert und zwar um eine dritte Drehachse D3, die parallel sowohl zur ersten Drehachse D1 als auch zur zweiten Drehachse D2 ausgerichtet und in einem konstanten zweiten Abstand A2 von der zweiten Drehachse D2 angeordnet ist.

In dieser Ausführungsform bilden die Glieder des Robotergreifers 11, welche durch den Greifergrundkörper 12, das Basisglied 14, das Zwischenglied 18 und dem Fingerträger 17 gebildet werden, eine kinematische Kette von Gliedern, die durch das erste Drehgelenk 15.1, das zweite Drehgelenk 15.2 und das dritte Drehgelenk 15.3 drehbar verstellt werden können. Die drei Drehachsen D1, D2 und D3 des ersten Drehgelenk 15.1, des zweiten Drehgelenks 15.2 und des dritten Drehgelenks 15.3 sind dabei parallel zueinander ausgerichtet. Im Ergebnis kann dadurch der auf dem Fingerträger 17 montierte erste Greiferfinger 16.1 in der Ebene der zweiten Stirnseite des Greifergrundkörpers 12 auf einer Bahn auf den feststehenden zweiten Greiferfinger 16.2 zu bewegt werden bzw. von diesem weg bewegt werden.

Das Basisglied 14 weist im Falle des Ausführungsbeispiels eine rotationssymmetrische Außenmantelwand auf, an der das Basisglied 14 vollständig innerhalb der Außenkontur des Greifergrundkörpers 12 drehbar gelagert ist, wie dies insbesondere in Fig. 4 gezeigt ist. Das Zwischenglied 18 des Robotergreifers 11 weist eine rotationssymmetrische Außenmantelwand auf, an der das Zwischenglied 18 vollständig innerhalb der Außenkontur des Basisglieds 14 drehbar gelagert ist. Der Fingerträger 17 des Robotergreifers 11 weist eine rotationssymmetrische Außenmantelwand auf, an der der Fingerträger 17 vollständig innerhalb der Außenkontur des Zwischenglieds 18 drehbar gelagert ist.

Wie insbesondere in Fig. 4 auch ersichtlich ist, weist das Basisglied 14 in einer speziellen Ausführungsvariante eine in Richtung der ersten Drehachse D1 weisende Bauhöhe H1 auf, die höchstens so groß ist, wie die in Richtung der ersten Drehachse D1 weisenden Bauhöhe H0 des Greifergrundkörpers 12. Das Zwischenglied 18 des Robotergreifers 11 weist dabei auch eine in Richtung der zweiten Drehachse D2 weisende Bauhöhe H2 auf, die höchstens so groß ist, wie die in Richtung der zweiten Drehachse D2 weisenden Bauhöhe H1 des Basisglieds 14. Der Fingerträger 17 des Robotergreifers 11 weist eine in Richtung der dritten Drehachse D3 weisende Bauhöhe H3 auf, die höchstens so groß ist, wie die in Richtung der dritten Drehachse D3 weisenden Bauhöhe H2 des Zwischenglieds 18.

In dieser speziellen Ausführungsvariante weist beispielsweise das erste Drehgelenk 15.1 ein das Basisglied 14 umgebendes erstes Wälzlager 19.1 mit einem Innenring, einer Innenringlaufbahn für Wälzkörper, einem Außenring und einer Außenringlaufbahn auf, wobei der Innenring an der rotationssymmetrischen Außenmantelwand des Basisglieds 14 befestigt ist. Alternativ kann die Innenringlaufbahn an der rotationssymmetrischen Außenmantelwand des Basisglieds 14 ausgebildet sein.

Dabei weist das zweite Drehgelenk 15.2 ein das Zwischenglied 18 umgebendes zweites Wälzlager 19.2 mit einem Innenring, einer Innenringlaufbahn für Wälzkörper, einem Außenring und einer Außenringlaufbahn auf, wobei der Innenring an der rotationssymmetrischen Außenmantelwand des Zwischenglieds 18 befestigt ist. Alternativ kann die Innenringlaufbahn an der rotationssymmetrischen Außenmantelwand des Zwischenglieds 18 ausgebildet sein.

Außerdem weist das dritte Drehgelenk 15.3 ein den Fingerträger 17 umgebendes drittes Wälzlager 19.3 mit einem Innenring, einer Innenringlaufbahn für Wälzkörper, einem Außenring und einer Außenringlaufbahn auf, wobei der Innenring an der rotationssymmetrischen Außenmantelwand des Fingerträgers 17 befestigt ist. Alternativ kann die Innenringlaufbahn an der rotationssymmetrischen Außenmantelwand des Fingerträgers 17 ausgebildet sein.

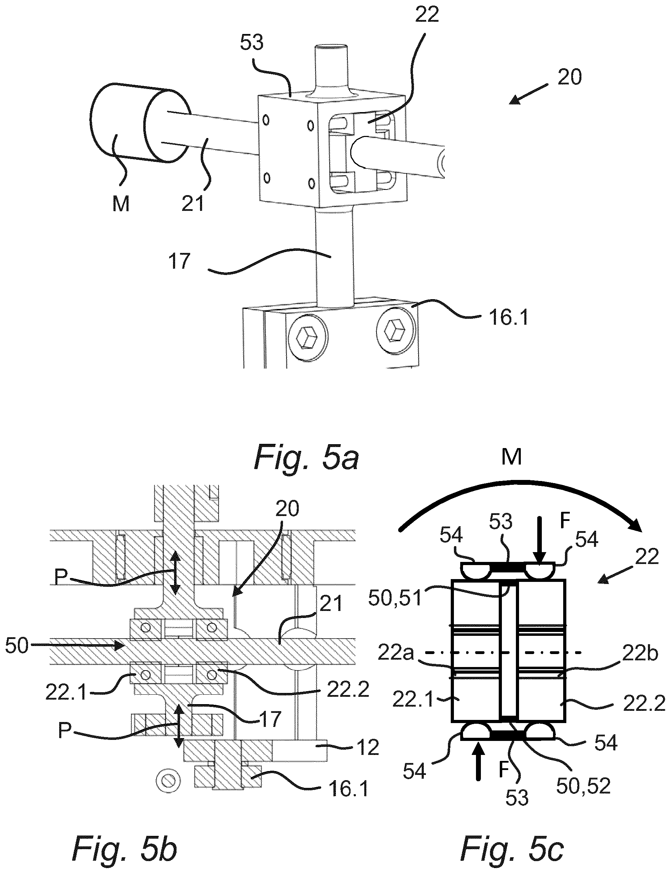

In Fig. 5a bis Fig. 7c sind konkrete Ausführungsbeispiele von Robotergreifern 11 mit erfindungsgemäßen Antriebs-Spindelmuttern 22, die einen ersten Mutternkörper und einen zweiten Mutternkörper aufweisen, gezeigt.

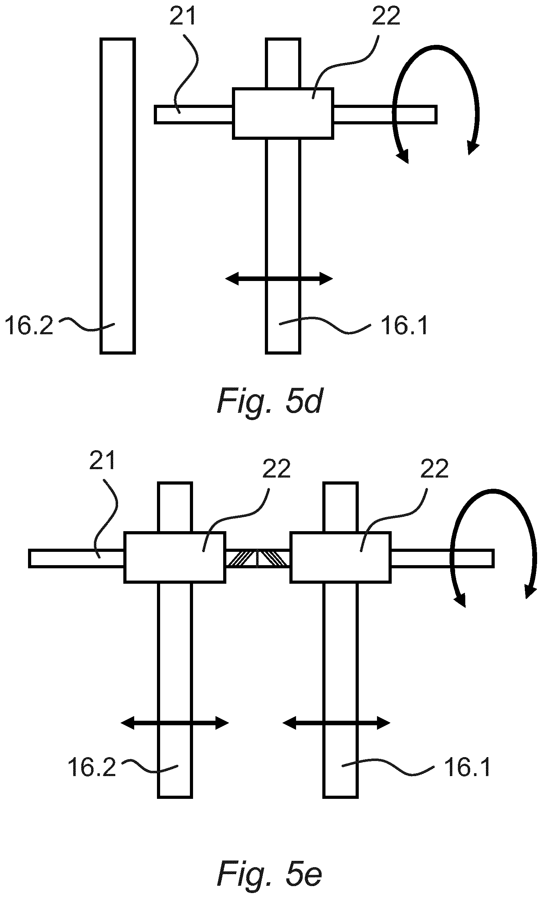

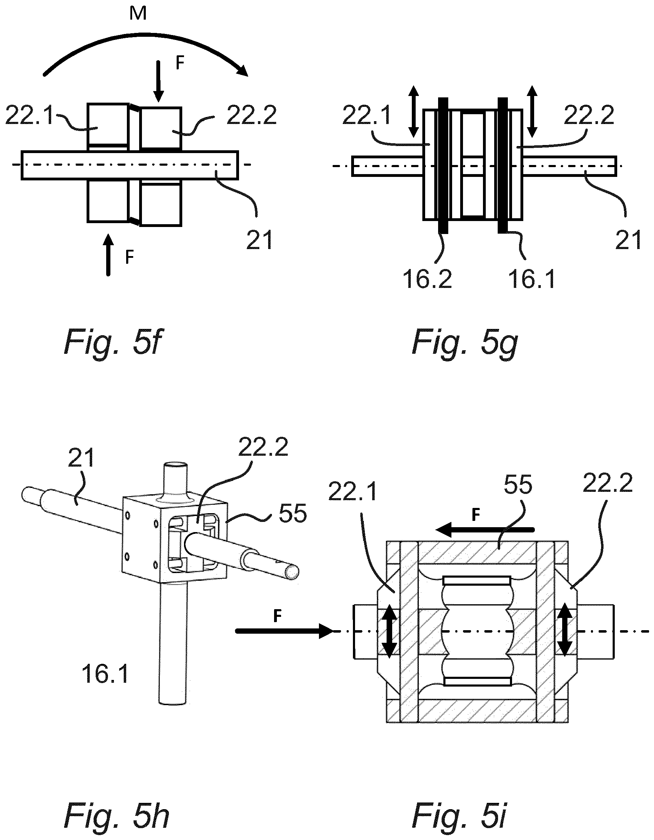

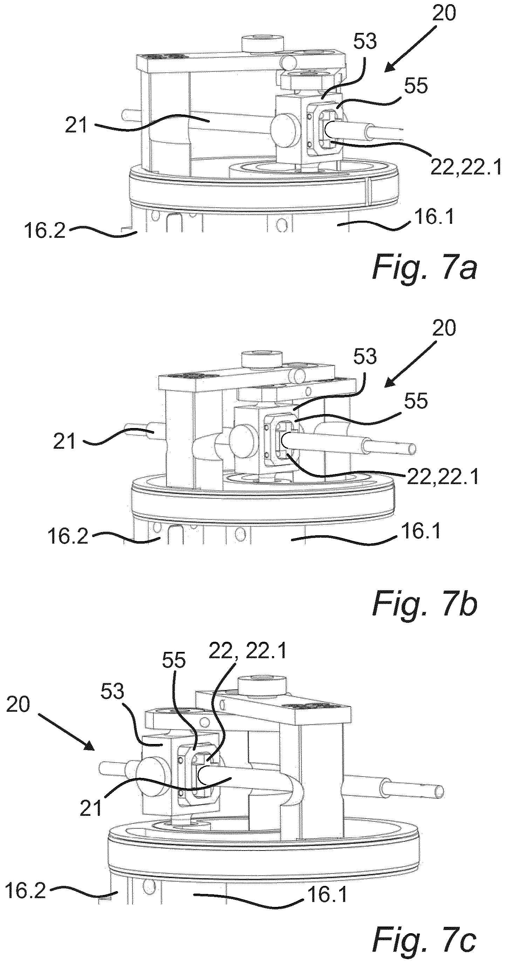

Die erfindungsgemäße Antriebsvorrichtung 20 gemäß Fig. 5 a bis Fig. 7c weist einen Spindeltrieb auf, der eine im Greifergrundkörper 12 durch einen Motor M drehangetriebene Antriebsspindel 21 und eine auf der Antriebsspindel 21 laufende Abtriebs-Spindelmutter 22 aufweist. Die Abtriebs-Spindelmutter 22 ist an den Fingerträger 17 gekoppelt, der mit dem ersten Greiferfinger 16.1 verbunden ist, um den ersten Greiferfinger 16.1 dadurch zu bewegen, dass eine von dem Motor M (Fig. 5a) angetriebene Drehung der Antriebsspindel 21, die Abtriebs-Spindelmutter 22 linear verstellt und die Abtriebs-Spindelmutter 22 ihrerseits den mit dem ersten Greiferfinger 16.1 verbundenen Fingerträger 17 bewegt, um den ersten Greiferfinger 16.1 relativ zum zweiten Greiferfinger 16.2 zu verstellen.

Die Abtriebs-Spindelmutter 22 weist einen ersten Mutternkörper 22.1 auf, der ein zur Antriebsspindel 21 korrespondierendes erstes Gewinde 22a aufweist, einen zweiten Mutternkörper 22.2 aufweist, der ein zur Antriebsspindel 21 korrespondierendes zweites Gewinde 22b aufweist, und der erste Mutternkörper 22.1 mit dem zweiten Mutternkörper 22.2 mittels einer Parallellenkeranordnung 50 verbunden ist, die ausgebildet ist, den ersten Mutternkörper 22.1 in einem vorbestimmten Abstand von dem zweiten Mutternkörper 22.2 zu halten und dabei einen Parallelversatz des ersten Mutternkörpers 22.1 von dem zweiten Mutternkörper 22.2 zuzulassen.

Der erste Mutternkörper 22.1 ist dazu mit dem zweiten Mutternkörper 22.2 über wenigstens zwei voneinander beabstandete starre Koppelstege 51, 52 verbunden, derart, dass ein erstes Ende eines ersten Koppelstegs 51 drehgelenkig mit einer ersten Seite des ersten Mutternkörpers 22.1 verbunden ist, ein zweites Ende des ersten Koppelstegs 51 drehgelenkig mit einer ersten Seite des zweiten Mutternkörpers 22.2 verbunden ist, ein erstes Ende eines zweiten Koppelstegs 52 drehgelenkig mit einer zweiten Seite des ersten Mutternkörpers 22.1 verbunden ist, und ein zweites Ende des zweiten Koppelstegs 52 drehgelenkig mit einer zweiten Seite des zweiten Mutternkörpers 22.2 verbunden ist, wie dies insbesondere in der schematischen Darstellung der Fig. 5c ersichtlich ist.

Die drehgelenkige Verbindung des ersten Endes des ersten Koppelstegs 51 mit der ersten Seite des ersten Mutternkörpers 22.1, die drehgelenkige Verbindung des zweiten Endes des ersten Koppelstegs 51 mit der ersten Seite des zweiten Mutternkörpers 22.2, die drehgelenkige Verbindung des ersten Endes des zweiten Koppelstegs 52 mit der zweiten Seite des ersten Mutternkörpers 22.1 und die drehgelenkige Verbindung des zweiten Endes des zweiten Koppelstegs 52 mit der zweiten Seite des zweiten Mutternkörpers 22.2 werden im Falle des vorliegenden Ausführungsbeispiels jeweils durch ein einteilig mit dem ersten Mutternkörper 22.1 und einteilig mit dem zweiten Mutternkörper 22.2 ausgebildete, filmscharnierartige dünne Wandverbindung gebildet.

Der Fingerträger 17 ist dabei bezüglich des Greifergrundkörpers 12 in Längserstreckung des ersten Greiferfingers 16.1 unabgestützt gelagert, wie dies in Fig. 5b durch die Pfeile P veranschaulicht ist, und zur Halterung des Fingerträgers 17 am Robotergreifer 11 in Längserstreckung des ersten Greiferfingers 16.1 ist der Fingerträger 17 über den ersten Mutternkörper 22.1 und den zweiten Mutternkörper 22.2 mit der Antriebsspindel 21 verbunden.

Der Fingerträger 17 weist im Falle des Ausführungsbeispiels, wie bspw. in Fig. 5a gezeigt, einen Käfig 53 auf in dem der erste Mutternkörper 22.1 und der zweiten Mutternkörper 22.2 insbesondere durch Punktauflager oder Linienauflager 54, senkrecht zur Antriebsspindel 21 und senkrecht zu den Führungen 16.1 und 16.2 der Mutternkörper, gelagert sind.

Gemäß der Ausführung nach Fig. 5d ist der erste Greiferfinger 16.1 bezüglich des Greifergrundkörpers 12 verstellbar gelagert und der zweite Greiferfinger 16.2 ist bezüglich des Greifergrundkörpers 12 starr befestigt.

Gemäß der Ausführung nach Fig. 5e ist sowohl der erste Greiferfinger 16.1 mittels zum Öffnen und Schließen des Robotergreifers relativ zum zweiten Greiferfinger 16.2 automatisch verstellbar, als auch der zweite Greiferfinger 16.2 mittels einer der Antriebsvorrichtung zum Öffnen und Schließen des Robotergreifers relativ zum ersten Greiferfinger 16.1 automatisch verstellbar. In dieser Ausführungsform sind die Greiferfinger 16.1, 16.2 mittels separater Abtriebs-Spindelmuttern 22 auf einer gemeinsamen Antriebsspindel 21 gelagert. Dabei weist jeder Greiferfinger 16.1, 16.2 eine erfindungsgemäß zweiteilige Abtriebs-Spindelmutter 22 auf.

Eine Anbindung des ersten Mutternkörpers 22.1 und des zweiten Mutternkörpers 22.2 an den Fingerträger 17 oder an den Rahmen 55 erfolgt gemäß Fig. 5f und Fig. 5g, derart, dass ein am ersten Greiferfinger 16.1 und zweiten Greiferfinger 16.2 anliegendes Quermoment um die Längsachse des ersten Greiferfingers 16.1 und zweiten Greiferfinger 16.2 als ein Kräftepaar auf die Muttern übertragen wird gemäß Fig. 5c, um den ersten Mutternkörper 22.1 und den zweiten Mutternkörper 22.2 entlang des Kräftepaares eine Parallelverschiebung ausführen zu lassen und das Kräftepaar an die Antriebsspindel 21 weitergeben wird.

Fig. 5h und Fig. 5i zeigen, wie der erste Mutternkörper 22.1 und der zweite Mutternkörper 22.2 erfindungsgemäß mittels eines Schiebelagers in einem Rahmen 55 gelagert sind, wobei das Schiebelagers ausgebildet ist, den ersten Mutternkörper 22.1 und den zweiten Mutternkörper 22.2 so zu lagern, dass sie unabhängig voneinander senkrecht zur Antriebsspindel 21 in einer Ebene verschoben werden können und Antriebskräfte, axial zur Antriebsspindel 21 an den Fingerträger 17 weitergeleitet werden.

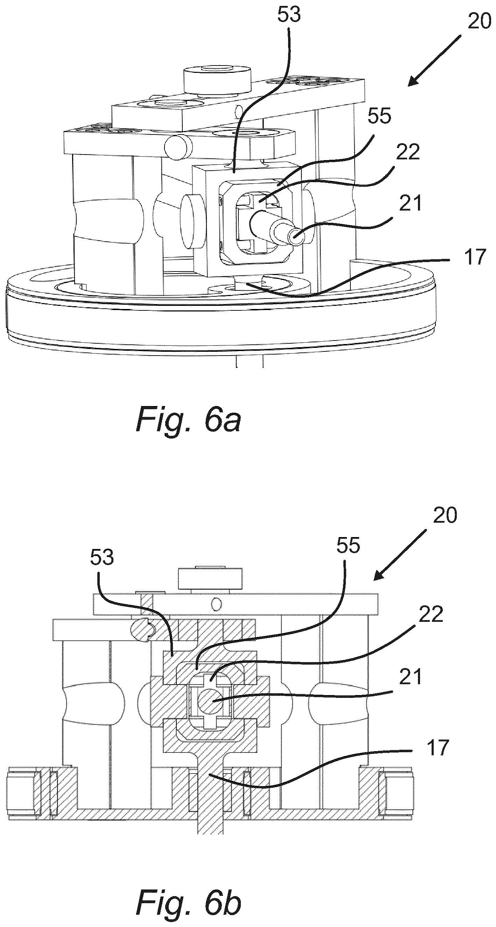

Der erste Mutternkörper 22.1 und der zweiten Mutternkörper 22.2 können wie in Fig. 6a bis 7c dargestellt, in einem Rahmen 55 gelagert sein, der um eine quer zur Längserstreckung des ersten Greiferfingers 16.1 ausgerichtete Schwenkachse schwenkbar in dem Käfig 53 des Fingerträgers 17 gelagert ist.

Das erste Gewinde 22a des ersten Mutternkörpers 22.1 und das zweite Gewinde 22b des zweiten Mutternkörpers 22.2 können dabei jeweils als ein Trapezgewinde ausgebildet sein und demgemäß weist dann auch die Antriebsspindel 21 ein zu dem ersten Gewinde 22a und dem zweiten Gewinde 22b korrespondierendes Trapezgewinde auf.

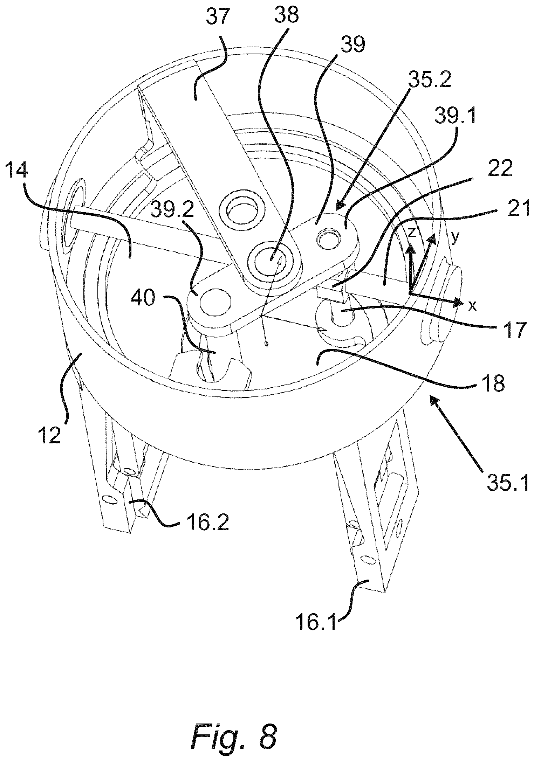

Die Fig. 8 zeigt eine abgewandelte Lagerungsart, die aus einem Paar von Lagerungseinheiten 35.1, 35.2 gebildet wird, wobei die eine Lagerungseinheit 35.2 (in z-Richtung) in einer oberen Ebene (Oberlager) und die andere Lagerungseinheit 35.1 (in z-Richtung) in einer unteren Ebene (Unterlager) angeordnet ist. Die Innendurchmesser der Lager der Lagerungseinheit 35.1 in der unteren Eben sind so groß, dass die Lagerung des Zwischenglieds 18 den Fingerträger 17 umschließt und die Lagerung des Basisglieds 14 das Zwischenglied 18 so umschließt, dass der Fingerträger 17 durch die Lagerung der unteren Ebene zur Abtriebs-Spindelmutter 22 reicht, auf der durch den Antrieb 20 vorgegebenen Bahn verfahren kann. Die Innendurchmesser der Lager der Lagerungseinheit 35.2 in der oberen Ebene können einen kleineren Durchmesser aufweisen, da sie die seriell nachfolgenden Lager nicht umschließen müssen, da in der oberen Lagerungsebene kein Bauteil auf der Fingerachse des bewegten Fingers die obere Lagerungsebene überquert. Das jeweilige Paar (Oberlager und Unterlager) von Lagerungseinheiten 35.1, 35.2 des Basisglieds 14 und des Zwischenglieds 18 fluchten jeweils miteinander.

Die obere Lagerungseinheit 35.2 kann demgemäß einen am Basisglied 14 befestigten L-förmigen Bügel 37 aufweisen, an dessen freiem Ende ein erstes Drehlager 38 angeordnet ist. An diesem ersten Drehlager 38 ist ein zweiarmiger Hebel 39 gelagert, der an seinem ersten Hebelarm 39.1 die Abtriebs-Spindelmutter 22 trägt und an seinem zweiten Hebelarm 39.2 über eine Stange 40 mit dem Zwischenglied 18 der unteren Lagerungseinheit 35.1 verbunden ist.

Die Aufnahme der Momente um die x-Achse und y-Achse kann über verschiedenen Maßnahmen erfolgen. Die Lagerung des Basisgliedes 14, des Zwischenglieds 18 und der Fingerträgers 17 kann so gestaltet sein, dass diese Segmente aufgrund eines Moments am bewegten Greiferfinger 16.1 um die x-Achse oder y-Achse nicht zueinander gekippt werden können, was durch Lagerungen erreicht werden kann, die die Momente um die x-Achse und Y-Achse aufnehmen. Beim Einbau von zwei Lagerungseinheiten ist sicher zu stellen, dass die beiden Ebenen des Basisglieds 14 und die beiden Ebenen des Zwischenglieds 18 nicht zueinander um ihre Drehachse tordieren können. Dies kann durch den Einsatz von Lagern erreicht werden, die die Momente um die x-Achse und y-Achse aufnehmen, weiterhin kann dies dadurch erfolgen, dass die beiden Ebenen des Basisglieds 14 und die beiden Ebenen des Zwischenglieds 18 so miteinander verbunden sind, dass deren Torsion verhindert wird. Weiterhin kann dies dadurch verhindert werden, dass die Mechanik die sich durch die Gelenke ergibt Zapfen enthält, deren Bewegung durch Anschläge am Greifergrundkörper 12 eingeschränkt wird.

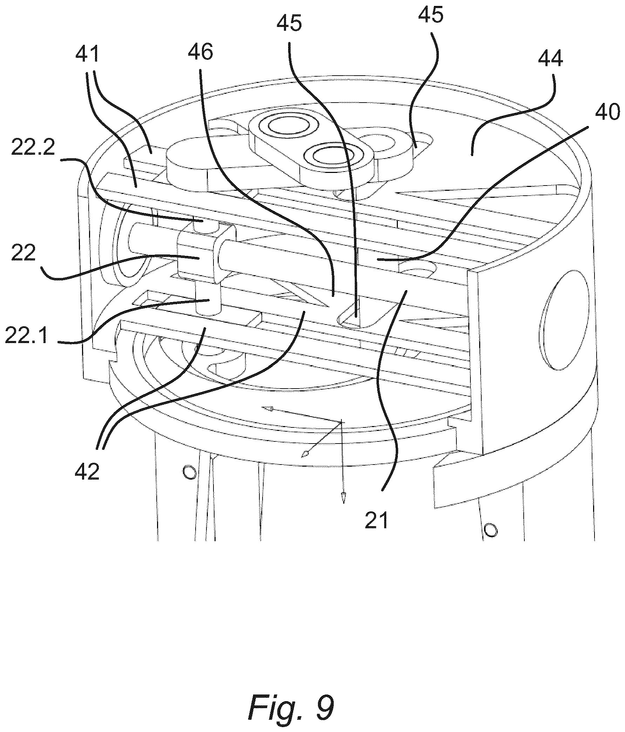

Wie in Fig. 9 näher gezeigt, kann die Abtriebs-Spindelmutter 22 zwei gegenüberliegende Zapfen 22.1 und 22.2 aufweisen, die in jeweils einem Paar von parallel voneinander beabstandet angeordneten oberen Linearführungen 41 und einem Paar von parallel voneinander beabstandet angeordneten unteren Linearführungen 42 geführt sind. Eine weitere Versteifung ist in der Ausführungsvariante gemäß Fig. 9 dadurch realisiert, dass die Stange 40 einen Zwischenkörperverbindungssteg bildet, der auf der oberen Ebene und gleichzeitig auf der unteren Ebene, also beidseitig von einer Führungsnut 45, insbesondere in Art jeweils eines Langlochs, gehalten wird, die in einer mit dem Greifergrundkörper 12 fest verbundenen Deckenwand 44 und Bodenwand 46 ausgebildet sind.

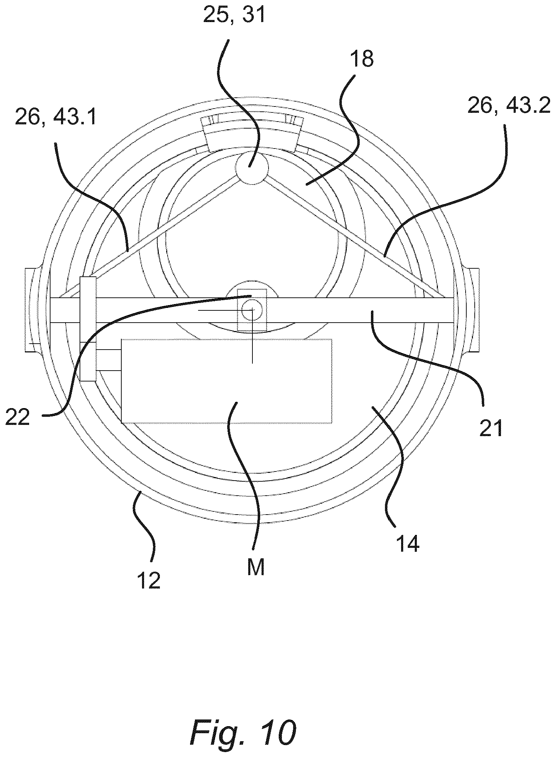

Die Fig. 10 zeigt eine beispielhafte Ausführungsform eines Zwangsmittels in Form von zwei Seilen 43.1 und 43.2, die jeweils ein erstes Seilende aufweisen, das an dem Zwischenglied-Verbindungssteg 25 bzw. an dem Zapfen 31 befestigt ist. Das jeweils andere Seilende ist an dem Basisglied 14 befestigt. Bei einer Bewegung des Zwischenglied-Verbindungsstegs 25 bzw. des Zapfens 31 auf einer Bahn, bspw. einer Geraden, können sich je nach Drehrichtung die Seile an dem Zwischenglied-Verbindungssteg 25 bzw. dem Zapfen 31 anlegen, d.h. am Umfang des Zapfens "aufwickeln". Nur in der in Fig. 10 dargestellten Singularitätsposition des Zwischenglied-Verbindungsstegs 25 bzw. des Zapfens 31 sind beide Seile 43.1 und 43.2 gespannt, um den Zwischenglied-Verbindungssteg 25 bzw. den Zapfen 31 in seiner Position zu halten.

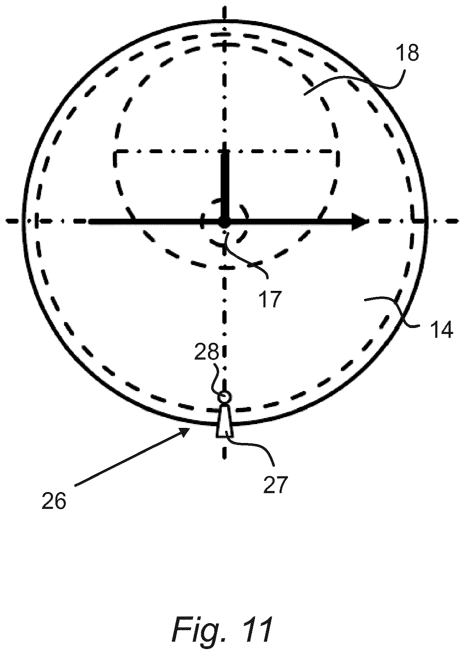

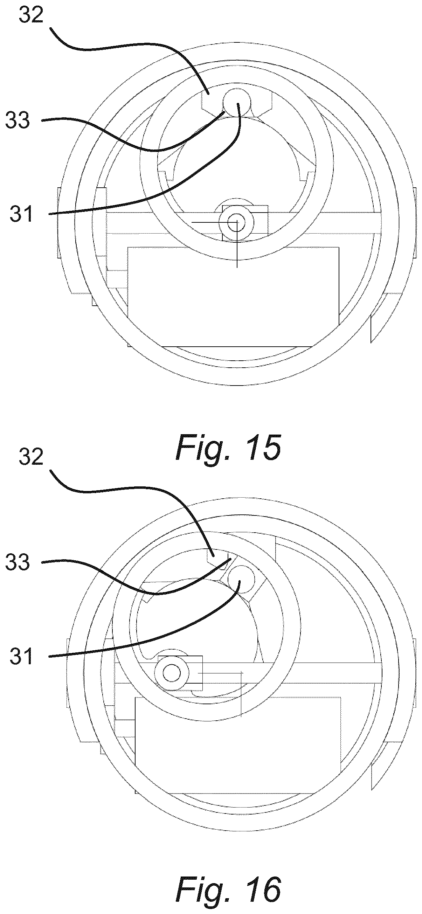

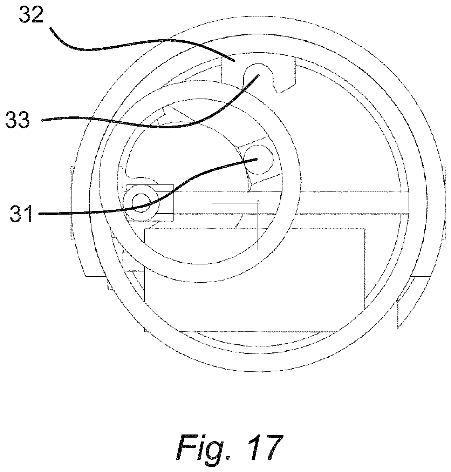

Die Fig. 11 bis Fig. 17 zeigen verschiedene Beispiele bei denen der Robotergreifer 11 eine Einrichtung zur Umgehung von Singularitäten aufweist, bei denen die erste Drehachse D1 mit der dritten Drehachse D3 fluchtet, aufweisend ein Zwangsmittel 26, das ausgebildet ist, eine Bewegung des ersten Drehgelenks 15.1 oder des zweiten Drehgelenks 15.2 zu behindern, so dass eine von der Antriebsvorrichtung 20 eingeleitete Antriebskraft zumindest überwiegend oder vollständig auf das unbehinderte Drehgelenk 15.1, 15.2 übertragen wird.

Wie in Fig. 11 schematisch gezeigt, kann das Zwangsmittel 26 einen mit dem Greifergrundkörper 12 verbundenen Reibkörper 27 und einen mit dem Basisglied 14 verbunden Gegenreibkörper 28 aufweisen, wobei der Reibkörper 27 und der Gegenreibkörper 28 derart ausgebildet und angeordnet sind, dass bei einer Annäherung der ersten Drehachse D1 an die dritte Drehachse D3 der Reibkörper 27 und der Gegenreibkörper 28, wie in Fig. 8 gezeigt, in einen Reibkontakt treten, welcher ein Weiterdrehen des Basisglieds 14 behindert.

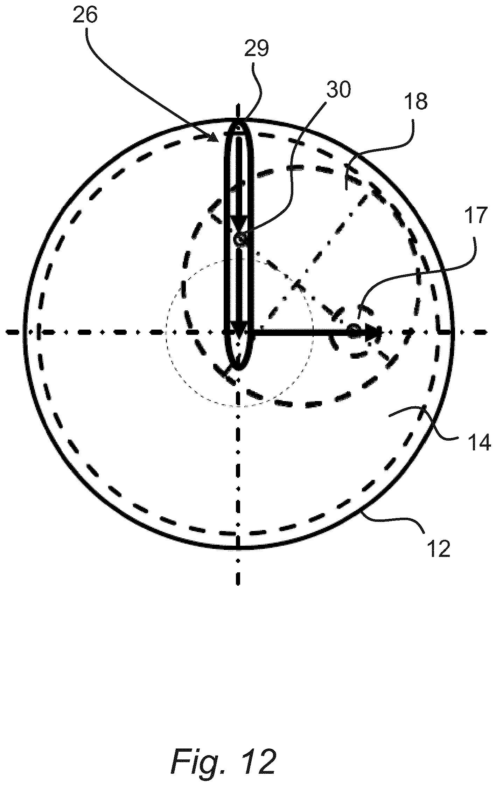

Wie in Fig. 12 schematisch gezeigt, kann das Zwangsmittel 26 einen mit dem Zwischenglied 18 verbundenen Stift 30 und eine mit dem Greifergrundkörper 12 verbundene Nut 29 aufweisen, wobei der Stift 30 in die Nut 27 derart eingreift, dass bei einer Annäherung der ersten Drehachse D1 an die dritte Drehachse D3 der Stift 30 an das obere Ende der Nut 29 gerät und dort anschlägt, so dass dadurch ein Weiterdrehen des Zwischenglieds 18 erzwungen wird.

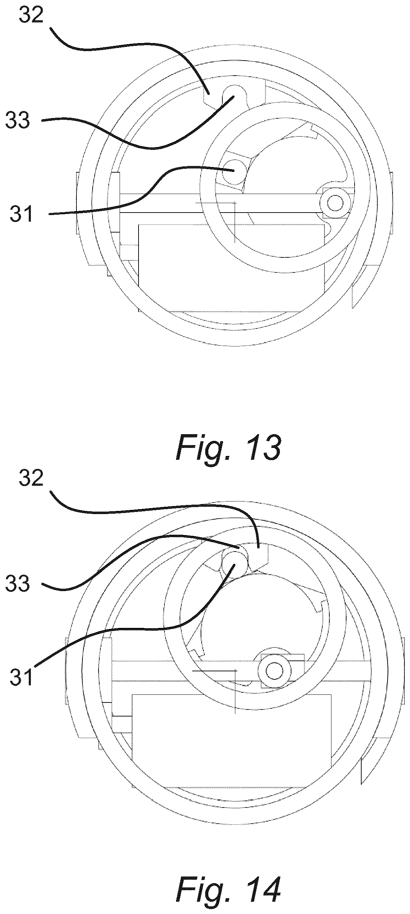

Wie in Fig. 13 bis Fig. 17 schematisch gezeigt, kann das Zwangsmittel 26 einen mit dem Zwischenglied 18 verbundenen Zapfen 31 und einen mit dem Greifergrundkörper 12 verbundenen Gabelkörper 32 aufweist, der eine Ausnehmung 33 umfasst, wobei der Gabelkörper 32 und der Zapfen 31 derart ausgebildet und angeordnet sind, dass bei einer Annäherung der ersten Drehachse D1 an die dritte Drehachse D3 der Zapfen 31 in die Ausnehmung 33 des Gabelkörpers 32 eingreift, um durch eine formschlüssige Kopplung des Greifergrundkörpers 12 mit dem Zwischenglied 18 ein gemeinsames Drehen im Bereich der Singularitätsposition des Zwischenglieds 18 und des Basisgliedes zu verhindern. Der Zapfen 31 wird dabei durch den die erste Kreisringscheibe 24.1 mit der zweiten Kreisringscheibe 24.2 verbindenden Zwischenglied-Verbindungssteg 25 gebildet.

## Patentansprüche

1. Robotergreifer, aufweisend einen Greifergrundkörper (12), der einen Anschlussflansch (13) aufweist, der zur Befestigung des Robotergreifers(11) an einem Werkzeugflansch (8) eines Roboterarms (2) ausgebildet ist, des Weiteren aufweisend einen ersten Greiferfinger (16.1) und wenigstens einen zweiten Greiferfinger (16.2), wobei der erste Greiferfinger (16.1) mittels einer Antriebsvorrichtung (20) zum Öffnen und Schließen des Robotergreifers (11) relativ zum zweiten Greiferfinger (16.2) automatisch verstellbar ist, und die Antriebsvorrichtung (20) dazu einen Motor (M) und ein Getriebe umfasst, wobei das Getriebe einen Spindeltrieb aufweist, der eine im Greifergrundkörper (12) durch den Motor (M) drehangetriebene Antriebsspindel (21) und eine auf der Antriebsspindel (21) laufende Abtriebs-Spindelmutter (22) aufweist, die an einen Fingerträger (17) gekoppelt ist, der mit dem ersten Greiferfinger (16.1) verbunden ist, um den ersten Greiferfinger (16.1) dadurch zu bewegen, dass eine von dem Motor (M) angetriebene Drehung der Antriebsspindel (21), die Abtriebs-Spindelmutter (22) linear verstellt und die Abtriebs-Spindelmutter (22) ihrerseits den mit dem ersten Greiferfinger (16.1) verbundenen Fingerträger (17) bewegt, um den ersten Greiferfinger (16.1) relativ zum zweiten Greiferfinger (16.2) zu verstellen, **wobei** die Abtriebs-Spindelmutter (22) einen ersten Mutternkörper (22.1) aufweist, der ein zur Antriebsspindel (21) korrespondierendes erstes Gewinde (22a) aufweist, einen zweiten Mutternkörper (22.2) aufweist, der ein zur Antriebsspindel (21) korrespondierendes zweites Gewinde (22b) aufweist, und der erste Mutternkörper (22.1) mit dem zweiten Mutternkörper (22.2) mittels einer Parallellenkeranordnung (50) verbunden ist, die ausgebildet ist, den ersten Mutternkörper (22.1) in einem vorbestimmten Abstand von dem zweiten Mutternkörper (22.2) zu halten und dabei einen Parallelversatz des ersten Mutternkörpers (22.1) von dem zweiten Mutternkörper (22.2) zuzulassen,
**dadurch gekennzeichnet, dass**
der erste Mutternkörper (22.1) und der zweite Mutternkörper (22.2) mittels eines Schiebelagers in einem Rahmen (55) gelagert sind, wobei das Schiebelager ausgebildet ist, den ersten Mutternkörper (22.1) und den zweiten Mutternkörper (22.2) so zu lagern, dass sie unabhängig voneinander senkrecht zur Antriebsspindel (21) in einer Ebene verschoben werden können und Antriebskräfte axial zur Antriebsspindel (21) an den Fingerträger (17) weitergeleitet werden.

2. Robotergreifer nach Anspruch 1, **dadurch gekennzeichnet, dass** der erste Mutternkörper (22.1) mit dem zweiten Mutternkörper (22.2) über wenigstens zwei voneinander beabstandete starre Koppelstege (51, 52) verbunden sind, derart, dass ein erstes Ende eines ersten Koppelstegs (51) drehgelenkig mit einer ersten' Seite des ersten Mutternkörpers (22.1) verbunden ist, ein zweites Ende des ersten Koppelstegs (51) drehgelenkig mit einer ersten Seite des zweiten Mutternkörpers (22.2) verbunden ist, ein erstes Ende eines zweiten Koppelstegs (52) drehgelenkig mit einer zweiten Seite des ersten Mutternkörpers (22.1) verbunden ist, und ein zweites Ende des zweiten Koppelstegs (52) drehgelenkig mit einer zweiten Seite des zweiten Mutternkörpers (22.2) verbunden ist.

3. Robotergreifer nach Anspruch 2, **dadurch gekennzeichnet, dass** die drehgelenkige Verbindung des ersten Endes des ersten Koppelstegs (51) mit der ersten Seite des ersten Mutternkörpers (22.1), die drehgelenkige Verbindung des zweiten Endes des ersten Koppelstegs (51) mit der ersten Seite des zweiten Mutternkörpers (22.2), die drehgelenkige Verbindung des ersten Endes des zweiten Koppelstegs (52) mit der zweiten Seite des ersten Mutternkörpers (22.1) und die drehgelenkige Verbindung des zweiten Endes des zweiten Koppelstegs (52) mit der zweiten Seite des zweiten Mutternkörpers (22.2) jeweils durch ein einteilig mit dem ersten Mutternkörper (22.1) und einteilig mit dem zweiten Mutternkörper (22.2) ausgebildetes Festkörpergelenk gebildet wird.

4. Robotergreifer nach einem der Ansprüche 1 bis 3, **dadurch gekennzeichnet, dass** eine Anbindung des ersten Mutternkörpers (22.1) und des zweiten Mutternkörpers (22.2) an den Fingerträger (17) oder an den Rahmen (55) erfolgt, derart, dass ein am ersten Greiferfinger (16.1) anliegendes Quermoment um die Längsachse des ersten Greiferfingers (16.1) als ein Kräftepaar auf die Muttern übertragen wird, um den ersten Mutternkörper (22.1) und den zweiten Mutternkörper (22.2) entlang des Kräftepaares eine Parallelverschiebung ausführen zu lassen und das Kräftepaar an die Antriebsspindel (21) weitergeben wird.

5. Robotergreifer nach einem der Ansprüche 1 bis 4, **dadurch gekennzeichnet, dass** der Fingerträger (17) bezüglich des Greifergrundkörpers (12) in Längserstreckung des ersten Greiferfingers (16.1) unabgestützt gelagert ist und zur Halterung des Fingerträgers (17) am Robotergreifer (11) in Längserstreckung des ersten Greiferfingers (16.1) der Fingerträger (17) über den ersten Mutternkörper (22.1) und den zweiten Mutternkörper (22.2) mit der Antriebsspindel (21) verbunden ist.

6. Robotergreifer nach einem der Ansprüche 1 bis 5, **dadurch gekennzeichnet, dass** der Fingerträger (17) einen Käfig (53) aufweist, in dem der erste Mutternkörper (22.1) und der zweiten Mutternkörper (22.2) gelagert sind.

7. Robotergreifer nach Anspruch 6, **dadurch gekennzeichnet, dass** der erste Mutternkörper (22.1) und der zweiten Mutternkörper (22.2) in einem Rahmen (55) gelagert sind, der um eine quer zur Längserstreckung des ersten Greiferfingers (16.1) und quer zur Längserstreckung der Antriebsspindel (21) ausgerichtete Schwenkachse schwenkbar in dem Käfig (53) des Fingerträgers (17) gelagert ist.

8. Robotergreifer nach einem der Ansprüche 1 bis 7, **dadurch gekennzeichnet, dass** das erste Gewinde (22a) des ersten Mutternkörpers (22.1) und das zweite Gewinde (22b) des zweiten Mutternkörpers (22.2) jeweils als ein Trapezgewinde ausgebildet sind und demgemäß auch die Antriebsspindel (21) ein zu dem ersten Gewinde (22a) und dem zweiten Gewinde (22b) korrespondierendes Trapezgewinde aufweist.

9. Robotergreifer nach einem der Ansprüche 1 bis 8, aufweisend ein Basisglied (14), welches mittels eines ersten Drehgelenks (15.1) um eine erste Drehachse (D1) drehbar bezüglich des Greifergrundkörpers (12) gelagert ist, und ein Zwischenglied (18), welches mittels eines zweiten Drehgelenks (15.2) bezüglich des Basisglieds (14) drehbar gelagert ist und zwar um eine zweite Drehachse (D2), die parallel zur ersten Drehachse (D1) ausgerichtet und in einem konstanten ersten Abstand (A1) von der ersten Drehachse (D1) angeordnet ist, wobei der Fingerträger (17) mittels eines dritten Drehgelenks (15.3) bezüglich des Zwischenglieds (18) drehbar gelagert ist und zwar um eine dritte Drehachse (D3), die parallel sowohl zur ersten Drehachse (D1) als auch zur zweiten Drehachse (D2) ausgerichtet und in einem konstanten zweiten Abstand (A2) von der zweiten Drehachse (D2) angeordnet ist, wobei die Antriebsvorrichtung (20) separat von dem ersten Drehgelenk (15.1), dem zweiten Drehgelenk (15.2) und dem dritten Drehgelenk (15.3) ausgebildet ist, sich gegen den Greifergrundkörper (12) abstützt und die ausgebildet ist, den Fingerträger (17) relativ zum zweiten Greiferfinger (16.2) mit einer Antriebskraft zu verstellen, die über den ersten Mutternkörper (22.1) und den zweiten Mutternkörper (22.2) in den Fingerträger (17) eingeleitet wird.

10. Robotergreifer nach Anspruch 9, aufweisend eine Linearführung, die ausgebildet ist, den Fingerträger (17) bezüglich des Greifergrundkörpers (12) mittels einer zweiwertigen ersten Lagerung zur Aufnahme von Kräften derart geführt zu lagern, dass der Fingerträger (17) nur in Richtung der Spindelachse (S) verstellbar ist, wobei der Fingerträger (17) mittels einer einwertigen zweiten Lagerung an die Abtriebs-Spindelmutter (22) zur Kraftübertragung über den ersten Mutternkörper (22.1) und den zweiten Mutternkörper (22.2) angekoppelt ist.

11. Robotergreifer nach einem der Ansprüche 9 oder 10, aufweisend eine Einrichtung zur Umgehung von den ersten Mutternkörper (22.1) und den zweiten Mutternkörper (22.2) drehmomentbelastenden Singularitätsstellungen, bei denen die erste Drehachse (D1) mit der dritten Drehachse (D3) fluchtet, aufweisend ein Zwangsmittel (26), das ausgebildet ist, eine Bewegung des Basisgliedes (14) um die erste Drehachse (D1) zu behindern, so dass eine von der Antriebsvorrichtung (20)' eingeleitete Antriebskraft im Bereich der Singularität zumindest überwiegend oder vollständig auf die Rotation des Zwischengliedes (18) um die zweite Drehachse (D2) übertragen wird.

12. Robotergreifer nach Anspruch 11, **dadurch gekennzeichnet, dass** das Zwangsmittel (26) einen mit dem Greifergrundkörper (12) verbundenen Reibkörper (27) und einen mit dem Basisglied (14) verbunden Gegenreibkörper (28) aufweist, wobei der Reibkörper (27) und der Gegenreibkörper (28) derart ausgebildet und angeordnet sind, dass bei einer Annäherung der ersten Drehachse (D1) an die dritte Drehachse (D3) der Reibkörper (27) und der Gegenreibkörper (28) in einen Reibkontakt treten, welcher ein Weiterdrehen des Basisglieds (14) behindert.

13. Robotergreifer nach Anspruch 11, **dadurch gekennzeichnet, dass** das Zwangsmittel (26) einen mit dem Zwischenglied (18) verbundenen Zapfen (31) und einen mit dem Greifergrundkörper (12) verbundenen Gabelkörper (32) aufweist, der eine Ausnehmung (33) umfasst, wobei der Gabelkörper (32) und der Zapfen (31) derart ausgebildet und angeordnet sind, dass bei einer Annäherung von erster Drehachse (D1) und dritter Drehachse (D3) der Zapfen (31) in die Ausnehmung (33) des Gabelkörpers (32) eingreift, um durch eine formschlüssige Kopplung des Greifergrundkörpers (12) mit dem Zwischenglied (18) ein Weiterdrehen des Zwischenglieds (18) zu erzwingen.

14. Robotergreifer nach Anspruch 11, **dadurch gekennzeichnet, dass** das Zwangsmittel (26) einen mit dem Zwischenglied (18) verbundenen Zapfen (31) und zwei Seile (43.1, 43.2) aufweist, die jeweils ein erstes Seilende aufweisen, die jeweils an dem Zapfen 31 befestigt sind und wobei die jeweils anderen Seilenden an dem Basisglied (14) befestigt sind.

## Claims

1. Robot gripper, having a gripper base body (12) which has a connecting flange (13) which is designed for fastening the robot gripper (11) to a tool flange (8) of a robot arm (2), furthermore having a first gripper finger (16.1) and at least one second gripper finger (16.2), the first gripper finger (16.1) being automatically adjustable relative to the second gripper finger (16.2) by means of a drive device (20) for opening and closing the robot gripper (11), and the drive device (20) comprising for this purpose a motor (M) and a gear mechanism, the gear mechanism having a spindle drive which drives a spindle in the gripper base body (12) through the motor (M). 2) by means of a drive device (20) for opening and closing the robot gripper (11) relative to the second gripper finger (16.2), and the drive device (20) comprises for this purpose a motor (M) and a transmission, the transmission having a spindle drive which has a drive spindle (21) driven in rotation in the gripper base body (12) by the motor (M) and an output spindle nut (22) which runs on the drive spindle (21) and is coupled to a finger carrier (17) which is connected to the first gripper finger (16.1) in order to move the first gripper finger (16.1) in that a rotation of the drive spindle (21) driven by the motor (M) linearly displaces the output spindle nut (22) and the output spindle nut (22) in turn moves the finger carrier (17) connected to the first gripper finger (16.1) to move the first gripper finger (16.1) relative to the second gripper finger (16.2), the output spindle nut (22) comprising a first nut body (22.1) having a first thread (22a) corresponding to the drive spindle (21), a second nut body (22.2) having a second thread (22b) corresponding to the drive spindle (21), and the first nut body (22.1) is connected to the second nut body (22.2) by means of a parallel link arrangement (50), which is designed to move the first nut body (22.1) at a predetermined distance from the second nut body (22.2) while permitting a parallel offset of the first nut body (22.1) from the second nut body (22.2),
**characterized in that**
the first nut body (22.1) and the second nut body (22.2) are mounted in a frame (55) by means of a sliding bearing, the sliding bearing being designed to mount the first nut body (22.1) and the second nut body (22.2) in such a way that they can be displaced independently of one another perpendicularly to the drive spindle (21) in a plane and drive forces are transmitted axially to the drive spindle (21) to the finger carrier (17).

2. Robot gripper according to claim 1, **characterized in that** the first nut body (22.1) is connected to the second nut body (22.2) via at least two spaced-apart rigid coupling webs (51, 52), such that a first end of a first coupling web (51) is pivotally connected to a first side of the first nut body (22.1), a second end of the first coupling web (51) is pivotally connected to a first side of the second nut body (22.2), a first end of a second coupling web (52) is pivotally connected to a second side of the first nut body (22.1), and a second end of the second coupling web (52) is pivotally connected to a second side of the second nut body (22.2).

3. Robot gripper according to claim 2, **characterized in that** the pivotal connection of the first end of the first coupling web (51) to the first side of the first nut body (22.1), the pivotal connection of the second end of the first coupling web (51) to the first side of the second nut body (22.2), the rotational connection of the first end of the second coupling web (52) to the second side of the first nut body (22.1), and the rotational connection of the second end of the second coupling web (52) to the second side of the second nut body (22.2) are each formed by a solid-state joint formed integrally with the first nut body (22.1) and integrally with the second nut body (22.2).

4. Robot gripper according to one of claims 1 to 3, **characterized in that** the first nut body (22.1) and the second nut body (22.2) are connected to the finger carrier (17) or to the frame (55) in such a way that a transverse moment applied to the first gripper finger (16.1) is transmitted to the nuts as a pair of forces about the longitudinal axis of the first gripper finger (16.1) in order to cause the first nut body (22.1) and the second nut body (22.2) to perform a parallel displacement along the pair of forces, and the pair of forces is transmitted to the drive spindle (21).

5. Robot gripper according to one of claims 1 to 4, **characterized in that** the finger carrier (17) is mounted unsupported with respect to the gripper base body (12) in the longitudinal extension of the first gripper finger (16.1) and, in order to hold the finger carrier (17) on the robot gripper (11) in the longitudinal extension of the first gripper finger (16.1), the finger carrier (17) is connected to the drive spindle (21) via the first nut body (22.1) and the second nut body (22.2).

6. Robot gripper according to any one of claims 1 to 5, **characterized in that** the finger carrier (17) comprises a cage (53) in which the first nut body (22.1) and the second nut body (22.2) are mounted.

7. Robot gripper according to claim 6, **characterized in that** the first nut body (22.1) and the second nut body (22.2) are mounted in a frame (55) which is mounted in the cage (53) of the finger carrier (17) so as to be pivotable about a pivot axis aligned transversely to the longitudinal extension of the first gripper finger (16.1) and transversely to the longitudinal extension of the drive spindle (21).

8. Robot gripper according to one of the claims 1 to 7, **characterized in that** the first thread (22a) of the first nut body (22.1) and the second thread (22b) of the second nut body (22.2) are each formed as a trapezoidal thread, and accordingly the drive spindle (21) also has a trapezoidal thread corresponding to the first thread (22a) and the second thread (22b).

9. Robot gripper according to any one of claims 1 to 8, comprising a base member (14) which is rotatably mounted by means of a first rotary joint (15.1) about a first axis of rotation (D1) with respect to the gripper base body (12), and an intermediate member (18) which is rotatably mounted by means of a second rotary joint (15. 2) rotatable with respect to the base member (14) about a second axis of rotation (D2) aligned parallel to the first axis of rotation (D1) and arranged at a constant first distance (A1) from the first axis of rotation (D1), wherein the finger carrier (17) being rotatable with respect to the base member (14) by means of a third rotary joint (15. 3) rotatable with respect to the intermediate member (18) about a third axis of rotation (D3) aligned parallel to both the first axis of rotation (D1) and the second axis of rotation (D2) and arranged at a constant second distance (A2) from the second axis of rotation (D2), the drive device (20) being separate from the first rotary joint (15. 1), the second rotary joint (15.2) and the third rotary joint (15.3), is supported against the gripper base body (12) and is designed to adjust the finger carrier (17) relative to the second gripper finger (16.2) with a driving force which is introduced into the finger carrier (17) via the first nut body (22.1) and the second nut body (22.2).

10. Robot gripper according to claim 9, having a linear guide which is designed to mount the finger carrier (17) in a guided manner with respect to the gripper base body (12) by means of a divalent first bearing for absorbing forces in such a way that the finger carrier (17) can be adjusted only in the direction of the spindle axis (S), the finger carrier (17) being coupled by means of a monovalent second bearing to the output spindle nut (22) for force transmission via the first nut body (22.1) and the second nut body (22.2).

11. Robot gripper according to any one of claims 9 or 10, comprising means for bypassing the first nut body (22.1) and the second nut body (22.2) torque-loading singularity positions in which the first rotational axis (D1) is aligned with the third rotational axis (D3), comprising constraining means (26) configured to constrain a movement of the base member (14) about the first rotational axis (D1) so that a driving force introduced by the driving device (20) in the singularity region is transmitted at least predominantly or completely to the rotation of the intermediate member (18) about the second rotational axis (D2).

12. Robot gripper according to claim 11, **characterized in that** the constraining means (26) comprises a friction body (27) connected to the gripper base body (12) and a counter friction body (28) connected to the base member (14), wherein the friction body (27) and the counter friction body (28) are designed and arranged in such a way that when the first axis of rotation (D1) approaches the third axis of rotation (D3), the friction body (27) and the counter friction body (28) come into frictional contact which impedes further rotation of the base member (14).

13. Robot gripper according to claim 11, **characterized in that** said constraining means (26) comprises a pin (31) connected to said intermediate member (18) and a fork body (32) connected to said gripper base body (12), said fork body (32) comprising a recess (33), wherein said fork body (32) and the pin (31) are so formed and arranged, that, when the first axis of rotation (D1) and the third axis of rotation (D3) approach, the pin (31) engages in the recess (33) of the fork body (32) in order to force the intermediate member (18) to rotate further by positively coupling the basic gripper body (12) to the intermediate member (18).

14. The robotic gripper of claim 11, **characterized in that** the constraining means (26) comprises a pin (31) connected to the intermediate member (18) and two cable cables (43.1, 43.2), each having a first cable end, each cable end being attached to the pin (31) and each other cable end being attached to the base member (14).

## Revendications

1. Pince de robot, comprenant un corps de base de pince (12) qui présente une bride de raccordement (13) conçue pour fixer la pince de robot (11) à une bride d'outil (8) d'un bras de robot (2), comprenant en outre un premier doigt de pince (16.1) et au moins un deuxième doigt de pince (16.2), le premier doigt de pince (16.1) étant réglable automatiquement par rapport au deuxième doigt de pince (16.2) au moyen d'un dispositif d'entraînement (20) pour ouvrir et fermer la pince de robot (11), et le dispositif d'entraînement (20) comprenant à cet effet un moteur (M) et une transmission, la transmission présentant un entraînement de broche qui entraîne une broche dans le corps de base de pince (12) par l'intermédiaire du moteur (M). 2) au moyen d'un dispositif d'entraînement (20) pour ouvrir et fermer la pince de robot (11) par rapport au deuxième doigt de pince (16.2), et le dispositif d'entraînement (20) comprend à cet effet un moteur (M) et une transmission, la transmission présentant un d'entraînement à broche qui comporte une broche d'entraînement (21) entra née en rotation dans le corps de base de pince (12) par le moteur (M) et un écrou de broche de sortie (22) qui tourne sur la broche d'entraînement (21) et qui est couplé à un support de doigt (17) qui est relié au premier doigt de pince (16. 1) pour déplacer le premier doigt de pince (16.1) par rotation de la broche d'entraînement (21) entraînée par le moteur (M) déplaçant linéairement l'écrou de broche de sortie (22) et l'écrou de broche de sortie (22) déplaçant à son tour le support de doigt (17) relié au premier doigt de pince (16.1) pour déplacer le premier doigt de pince (16. 1) par rapport au deuxième doigt de pince (16.2), l'écrou de broche de sortie (22) comprenant un premier corps d'écrou (22.1) ayant un premier filetage (22a) correspondant à la broche d'entraînement (21), un deuxième corps d'écrou (22. 2) ayant un deuxième filetage (22b) correspondant à la broche d'entraînement (21), et le premier corps d'écrou (22.1) est relié au second corps d'écrou (22.2) au moyen d'un agencement de liaison parallèle (50) adapté pour maintenir le premier corps d'écrou (22.1) à une distance prédéterminée du second corps d'écrou (22.2), formant ainsi une liaison parallèle entre le premier corps d'écrou (22.1) et le second corps d'écrou (22.2). 2) tout en permettant un déplacement parallèle du premier corps d'écrou (22.1) par rapport au second corps d'écrou (22.2),
**caractérisé en ce que**
le premier corps d'écrou (22.1) et le second corps d'écrou (22.2) sont montés dans un cadre (55) au moyen d'un palier coulissant, le palier coulissant étant conçu pour maintenir le premier corps d'écrou (22.1) et le second corps d'écrou (22.2) à une distance prédéterminée l'un de l'autre. 1) et le second corps d'écrou (22.2) de telle sorte qu'ils puissent être déplacés indépendamment l'un de l'autre perpendiculairement à la broche d'entraînement (21) dans un plan et que les forces d'entraînement soient transmises axialement à la broche d'entraînement (21) au porte-doigts (17).

2. Pince de robot selon la revendication 1, **caractérisée en ce que** le premier corps d'écrou (22.1) est relié au second corps d'écrou (22.2) par l'intermédiaire d'au moins deux bandes d'accouplement rigides (51, 52) espacées l'une de l'autre, de sorte qu'une première extrémité d'une première bande d'accouplement rigides (51) est reliée de manière pivotante à un premier côté du premier corps d'écrou (22. 1), une seconde extrémité de la pre-mière bande de d'accouplement rigides (51) est reliée de manière pivotante à un premier côté du second corps d'écrou (22.2), une première extrémité d'une deuxième bande de d'accouplement rigides (52) est reliée de manière pivotante à un second côté du premier corps d'écrou (22.1), et une seconde extrémité de la deuxième bande de d'accouplement rigides (52) est reliée de manière pivotante à un second côté du second corps d'écrou (22.2) .

3. Pince de robot selon la revendication 2, **caractérisée en ce que** la connexion pivotante de la première extrémité de la première bande de d'accouplement rigides (51) au premier côté du premier corps d'écrou (22.1), la connexion pivotante de la deuxième extrémité de la première bande de d'accouplement rigides (51) au premier côté du deuxième corps d'écrou (22.2), la connexion pivotante de la première extrémité de la (52) au deuxième côté du premier corps d'écrou (22.1), et deuxième bande de d'accouplement rigides la connexion rotative de la seconde extrémité de la deuxième bande de d'accouplement rigides (52) au second côté du second corps d'écrou (22.2) est respectivement formée par un joint solide formé intégralement avec le premier corps d'écrou (22.1) et intégralement avec le second corps d'écrou (22.2).

4. Pince de robot selon l'une des revendications 1 à 3, **caractérisée en ce que** le premier corps d'écrou (22.1) et le deuxième corps d'écrou (22.2) sont reliés au support de doigt (17) ou un cadre (55) de telle sorte qu'un moment transversal appliqué au premier doigt de pince (16. 1) est transmise aux écrous sous la forme d'une paire de forces autour de l'axe longitudinal du premier doigt de pince (16.1) afin d'amener le premier corps d'écrou (22.1) et le second corps d'écrou (22.2) à effectuer un déplacement parallèle le long de la paire de forces, et la paire de forces est transmise à la broche d'entraînement (21).

5. Pince de robot selon l'une des revendications 1 à 4, **caractérisée en ce que** le support de doigt (17) est monté sans appui par rapport au corps de base de pince (12) dans l'extension longitudinale du premier doigt de pince (16.1) et, pour maintenir le support de doigt (17) sur la pince de robot (11) dans l'extension longitudinale du premier doigt de pince (16.1), le support de doigt (17) est relié à la broche d'entraînement (21) par l'intermédiaire du premier corps d'écrou (22.1) et du deuxième corps d'écrou (22.2).

6. Pince de robot selon l'une quelconque des revendications 1 à 5, **caractérisée en ce que** le support de doigt (17) comprend une cage (53) dans laquelle sont montés le premier corps d'écrou (22.1) et le deuxième corps d'écrou (22.2) .

7. Pince de robot selon la revendication 6, **caractérisée en ce que** le premier corps d'écrou (22.1) et le deuxième corps d'écrou (22.2) sont montés dans un cadre (55) qui est monté dans la cage (53) du support de doigt (17) de manière à pouvoir pivoter autour d'un axe de pivotement aligné transversalement à l'étendue longitudinale du premier doigt de pince (16.1) et transversalement à l'étendue longitudinale de la broche d'entraînement (21) .

8. Pince de robot selon l'une des revendications 1 à 7, **caractérisée en ce que** le premier filetage (22a) du premier corps d'écrou (22.1) et le deuxième filetage (22b) du deuxième corps d'écrou (22.2) sont chacun réalisés sous la forme d'un filetage trapézoïdal et, par conséquent, la broche d'entraînement (21) présente également un filetage trapézoïdal correspondant au premier filetage (22a) et au deuxième filetage (22b).

9. Pince de robot selon l'une quelconque des revendications 1 à 8, comprenant un élément de base (14) monté pour tourner par rapport au corps de base de la pince (12) autour d'un premier axe de rotation (D1) au moyen d'un premier joint rotatif (15.1), et un élément intermédiaire (18) monté pour tourner par rapport à l'élément de base (14) autour d'un second axe de rotation (D2) au moyen d'un second joint rotatif (15.2). 2) pouvant tourner par rapport à l'élément de base (14) autour d'un deuxième axe de rotation (D2) aligné parallèlement au premier axe de rotation (D1) et disposé à une première distance constante (A1) du premier axe de rotation (D1), dans lequel le support de doigt (17) est monté à rotation par rapport à l'élément intermédiaire (18) au moyen d'une troisième joint rotatif (15.3) autour d'un troisième axe de pivotement (D3) qui est aligné parallèlement à la fois au premier axe de pivotement (D1) et au deuxième axe de pivotement (D2) et est disposé à une deuxième distance constante (A2) du deuxième axe de pivotement (D2), dans lequel le dispositif d'entraînement (20) est formé séparément de la première joint rotatif (15. 1), la second joint rotatif (15.2) et la troisième joint rotatif (15.3), s'appuie sur le corps de base (12) de la pince et est conçu pour déplacer le support de doigt (17) par rapport au deuxième doigt de pince (16.2) avec une force d'entraînement qui est introduite dans le support de doigt (17) par l'intermédiaire du premier corps d'écrou (22.1) et du deuxième corps d'écrou (22.2) .

10. Pince de robot selon la revendication 9, avec un guidage linéaire qui est conçu pour le montage guidé du support de doigt (17) par rapport au corps de base de pince (12) au moyen d'un premier palier divalent pour la réception des forces de telle sorte que le support de doigt (17) ne peut être réglé que dans la direction de l'axe de la broche (S), le support de doigt (17) étant couplé au moyen d'un deuxième palier monovalent à l'écrou de la broche de sortie (22) pour la transmission de la force par l'intermédiaire du premier corps d'écrou (22.1) et du deuxième corps d'écrou (22.2).

11. Pince de robot selon l'une quelconque des revendications 9 ou 10, comprenant des moyens pour contourner le premier corps d'écrou (22.1) et le deuxième corps d'écrou (22. 2) des positions de singularité de charge de couple dans lesquelles le premier axe de rotation (D1) est aligné avec le troisième axe de rotation (D3), comprenant des moyens de contrainte (26) configurés pour contraindre un mouvement de l'élément de base (14) autour du premier axe de rotation (D1) de sorte qu'une force d'entraînement introduite par le dispositif d'entraînement (20) dans la région de singularité est transmise au moins de manière prédominante ou complète à la rotation de l'élément intermédiaire (18) autour du deuxième axe de rotation (D2).

12. Pince de robot selon la revendication 11, **caractérisée en ce que** le moyen de contrainte (26) comprend un corps de friction (27) relié au corps de base de pince (12) et un corps de contre-friction (28) relié à l'élément de base (14), dans lequel le corps de friction (27) et le corps de contre-friction (28) sont conçus et disposés de telle sorte que, lorsque le premier axe de rotation (D1) se rapproche du troisième axe de rotation (D3), le corps de friction (27) et le corps de contre-friction (28) entrent en contact par friction, ce qui empêche la poursuite de la rotation de l'élément de base (14).

13. Pince de robot selon la revendication 11, **caractérisée en ce que** le moyen de contrainte (26) comprend une goupille (31) reliée à l'élément intermédiaire (18) et un corps de fourche (32) relié au corps de base de pince (12) et comprenant un évidement (33), dans lequel le corps de fourche (32) et la goupille (31) sont formés et agencés de telle manière que que, lorsque le premier axe de rotation (D1) et le troisième axe de rotation (D3) se rapprochent, la goupille (31) s'engage dans l'évidement (33) du corps de fourche (32) afin de forcer l'élément intermédiaire (18) à tourner davantage en accouplant positivement le corps de base de pince (12) à l'élément intermédiaire (18).

14. Pince robotique selon la revendication 11, **caractérisée en ce que** le moyen de contrainte (26) comprend une goupille (31) reliée à l'élément intermédiaire (18) et deux câbles (43.1, 43.2) ayant chacun une première extrémité de câble, chaque extrémité de câble étant fixée à la goupille (31) et les autres extrémités de câble étant fixées à l'élément de base (14).
